# EUROPEAN PATENT SPECIFICATION

(11) **EP 4 414 833 B1**
(45) Date of publication and mention of the grant of the patent: **22.04.2026**
(21) Application number: 22894605.9
(22) Date of filing: 28.10.2022
(51) Int. Cl.: G06F 3/0481, G06F 3/04817, G06F 3/0482, G06F 3/0486, G06F 3/0488, G06F 3/04883, G06F 3/04886, G06F 9/451

(54) **WINDOW SWITCHING METHOD, ELECTRONIC DEVICE, AND READABLE STORAGE MEDIUM**
FENSTERUMSCHALTVERFAHREN, ELEKTRONISCHE VORRICHTUNG UND LESBARES SPEICHERMEDIUM
PROCÉDÉ DE COMMUTATION DE FENÊTRE, DISPOSITIF ÉLECTRONIQUE ET SUPPORT DE STOCKAGE LISIBLE

(30) Priority: 16.11.2021 CN 202111357820
(43) Date of publication of application: 14.08.2024
(73) Proprietor: Huawei Technologies Co., Ltd., Shenzhen, Guangdong 518129 (CN)
(72) Inventor: ZHANG, Yanan, Shenzhen, Guangdong 518129 (CN); WANG, Hongjun, Shenzhen, Guangdong 518129 (CN); FAN, Zhiming, Shenzhen, Guangdong 518129 (CN); ZHANG, Jing, Shenzhen, Guangdong 518129 (CN)
(74) Representative: Pfenning, Meinig & Partner mbB
(86) International application number: PCT/CN2022/128266
(87) International publication number: WO 2023/088068

(56) References cited:
- EP-A1- 4 068 088
- EP-A1- 4 116 807
- EP-A1- 4 130 963
- WO-A1-2021/135354
- WO-A1-2021/184954
- WO-A1-2021/212922
- WO-A2-2011/099803
- CN-A- 106 775 313
- CN-A- 108 984 065
- CN-A- 113 342 248
- CN-A- 114 416 227
- US-A1- 2014 157 163
- US-A1- 2020 310 627

## Description

This application claims priority to Chinese Patent Application No. 202111357820.2, filed with the China National Intellectual Property Administration on November 16, 2021 and entitled "WINDOW SWITCHING METHOD, ELECTRONIC DEVICE, AND READABLE STORAGE MEDIUM".

### TECHNICAL FIELD

This application relates to the field of smart terminal technologies, and specifically, to a window switching method, an electronic device, and a readable storage medium.

### BACKGROUND

With the development of smart terminal technologies, more terminal electronic devices can meet a multi-window use requirement of a user, and provide various multi-mode windows such as a split-screen mode and a small-window mode for the user. In the split-screen mode, two windows may be displayed on a screen of an electronic device for the user to operate. In the small-window mode, an interface of a running application may be scaled down and displayed in a small window for running, so that the user first operates an interface of another application to handle an emergency.

However, in a process of switching a window displayed by the electronic device from a full-screen mode window (a window in which an interface of an application is displayed in full screen) to a split-screen mode window or to a small-window mode window, the user usually needs to perform a plurality of continuous operations. For example, the user first operates an application window that is displayed in the full-screen mode to enter a multi-task interface, then taps the application window on the multi-task interface to open a multi-mode window option button, and selects the split-screen mode from the multi-mode window option button. As a result, the user cannot quickly switch an interface window, that is displayed by the electronic device, between the full-screen mode and the split-screen mode, or between the full-screen mode and the small-window mode. WO2021/212922 A1 discloses a method for dragging objects.

### SUMMARY

Embodiments of this application provide a window switching method, an electronic device, and a readable storage medium, to improve operation efficiency of switching a window by a user, and help improve user experience. The invention is set out in the appendend claims.

According to a first aspect not covered by the claims, an embodiment of this application provides a window switching method, applied to an electronic device. The method includes: detecting a first touch operation of a user, and displaying a first interface, where the first interface includes a first identifier and at least one application window, the first identifier is displayed in a first response region, the first response region is located in a display region corresponding to the first interface, the at least one application window includes a first application window, and an interface of a first application is displayed in the first application window; and detecting a first drag operation, and displaying the first application window in a first mode, where the first drag operation includes an operation of dragging the first application window to the first response region, and the first touch operation and the first drag operation are one continuous operation.

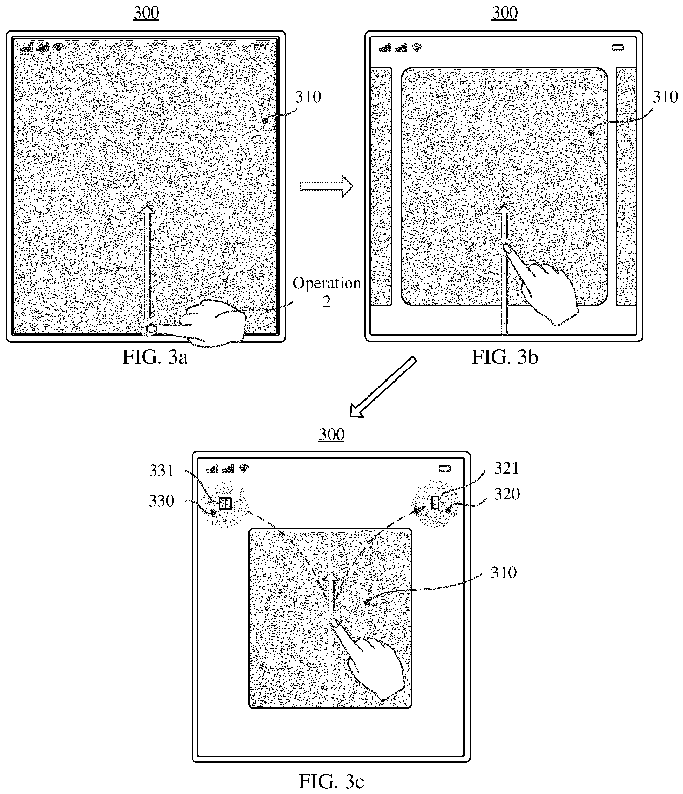

That is, when a touch operation of switching a window display mode by the user is detected, the first identifier indicating a location of a preset first mode hot zone may be displayed on a display interface of the electronic device. If it is further detected that the first application window on the display interface of the electronic device is further dragged to a preset hot zone through the touch operation of the user, the electronic device triggers displaying the first application window in the first mode. The first identifier on the first interface may be, for example, a split-screen hot zone icon or a small-window hot zone icon described in the following embodiments, or may be a hot zone mask corresponding to the preset hot zone described in the following embodiments, for example, a small-window hot zone 320 or a split-screen hot zone 330 shown in FIG. 3c. The first response region may be, for example, a split-screen hot zone or a small-window hot zone described in the following embodiments. The split-screen hot zone icon is correspondingly displayed in the split-screen hot zone, and the small-window hot zone icon is correspondingly displayed in the small-window hot zone. The first application window may be, for example, an application window like a WeChat^{™} window, or an object window of a slide-up operation performed by the user described in the following embodiments. The first mode may be correspondingly the foregoing split-screen hot zone or small-window hot zone.

The foregoing first touch operation and the continuous first drag operation are, for example, an operation of sliding up to a location of the split-screen hot zone icon, sliding up to a location of the small-window hot zone icon, or sliding right to the small-window hot zone or the split-screen hot zone described in the following embodiments. It may be understood that the "continuous operation" in this application means that a finger does not leave a screen of the electronic device in a process of performing the first touch operation and the first drag operation by the user, and the finger may continuously perform the two operations. Certainly, it is also considered that a finger pauses for a moment on the screen of the electronic device during an operation process is a meaning expressed by the continuous operation. Operation objects of the first touch operation and the first drag operation are a same object, for example, both are the first application window.

In a possible implementation of the first aspect, the dragging the first application window to the first response region includes: making an entire display region of the first application window located in the first response region; or making a size of an overlapping region between a display region of the first application window and the first response region greater than a preset size threshold; or detecting that a touch location of the first drag operation is located in the first response region.

The first application window is the object window described in the following embodiments, and the first response region is the preset hot zone described in the following embodiments. Therefore, in the foregoing implementation, the dragging the object window to the preset hot zone may include a plurality of cases. For example, in a case in which all content displayed in a display region of the object window and a border of the object window are located in the preset hot zone, it is considered that the object window is dragged to the preset hot zone. Alternatively, in a case in which some content displayed in the object window and a part of a border of the object window are located in the preset hot zone, and a size of an overlapping region between the object window and the preset hot zone is greater than the preset size threshold, it is considered that the object window is dragged to the preset hot zone. Alternatively, when it is detected that the touch location of the first drag operation on the object window is located in the preset hot zone, it is considered that the object window is dragged to the preset hot zone. The preset size threshold may be, for example, set to an appropriate value less than a size of the display region of the object window. This is not limited herein.

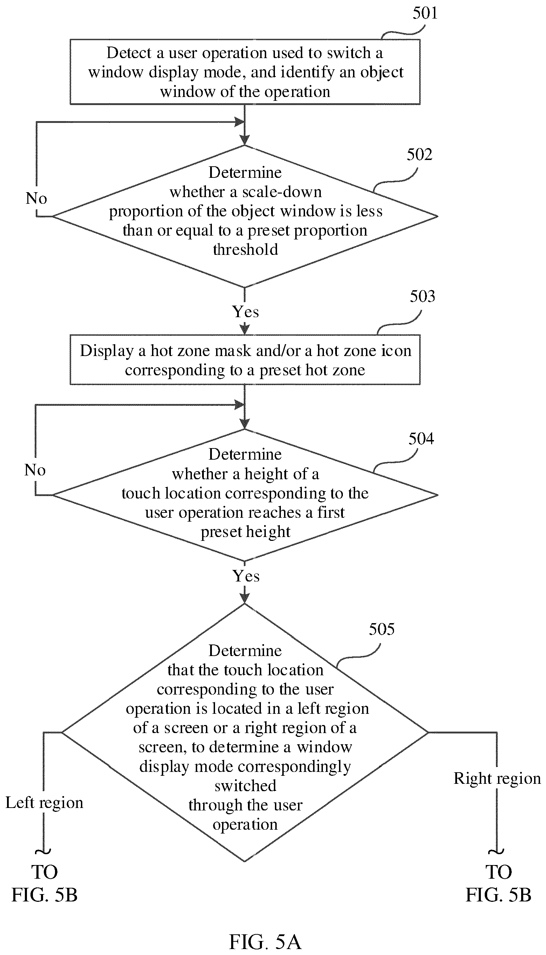

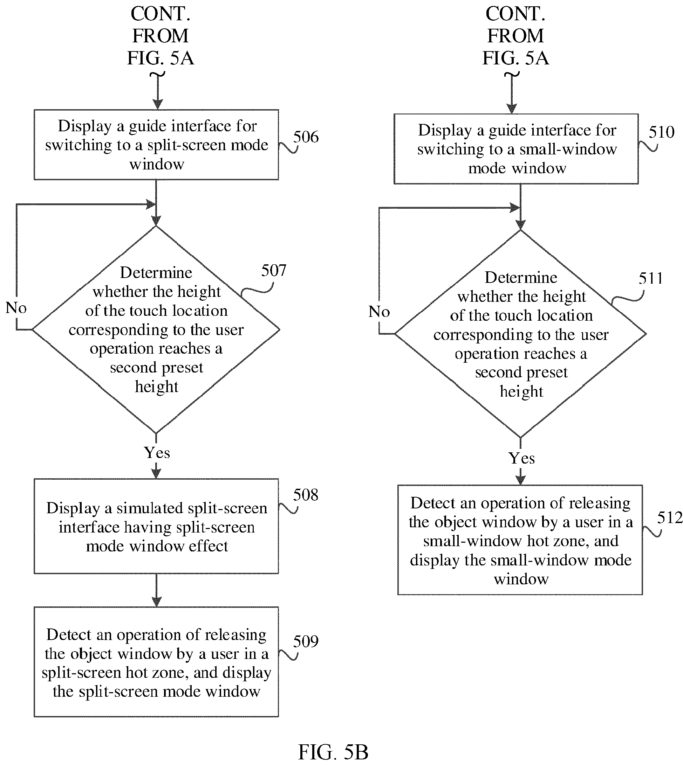

It may be understood that, in embodiments of this application, in an example, whether a height of the touch location meets a preset height threshold condition and/or that a location of the touch location is located on the screen of the electronic device may be determined by detecting obtained coordinate information of the touch location of the first drag operation, to determine whether the touch location is located in the preset hot zone. For details, refer to descriptions of a specific implementation process of a corresponding step in a procedure shown in FIG. 5A and FIG. 5B in the following embodiments. Details are not described herein.

In a possible implementation of the first aspect, the continuous operation includes: The electronic device continuously detects touch points in a process in which the first touch operation and the first drag operation are performed.

That is, in a process in which the user performs the first touch operation and the first drag operation, the finger does not leave the screen of the electronic device. For details, refer to the foregoing related explanations about the "continuous operation". Details are not described herein again.

In a possible implementation of the first aspect, the method further includes: displaying a second interface in response to the first drag operation, where the second interface includes a second window and a third window, and the third window is a window obtained after the first application window is displayed in the first mode. The third window is displayed above the second window in a floating manner, a height of the third window is equal to a height of the second window, and a width of the third window is less than a width of the second window; or the third window is displayed above the second window in a floating manner, a width of the third window is equal to a width of the second window, and a height of the third window is less than a height of the second window; or the third window and the second window are displayed in split screen, and a height of the third window is equal to a height of the second window or a width of the third window is equal to a width of the second window.

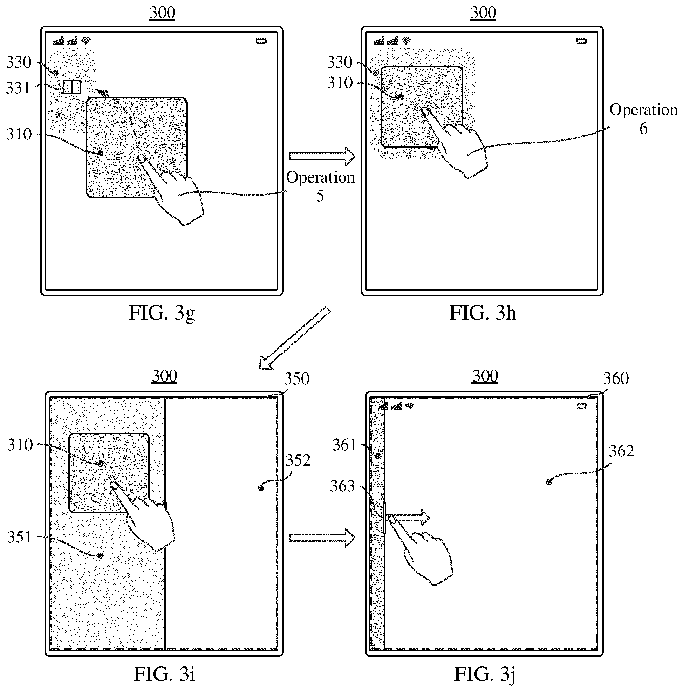

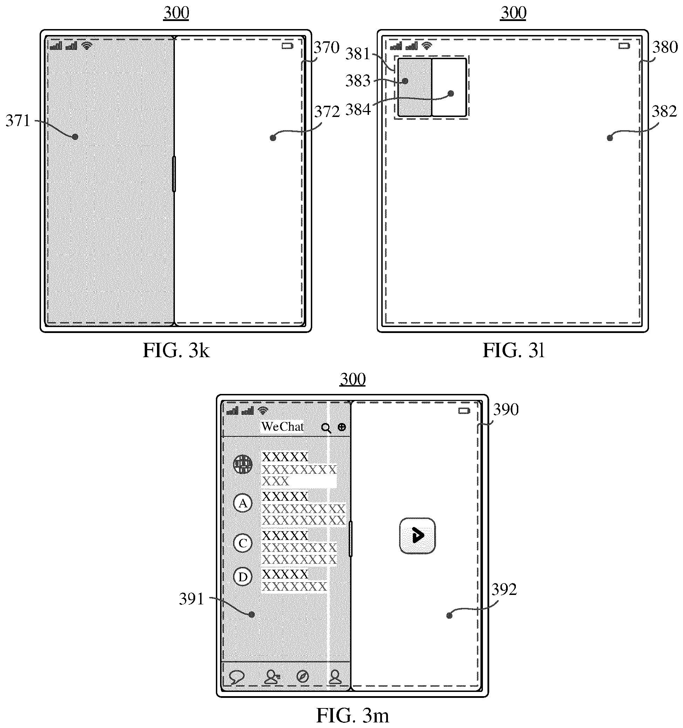

As shown above, the first application window (namely, the object window) is dragged to the first response hot zone (namely, the preset hot zone) through the first drag operation of the user. Therefore, in response to the first drag operation of the user, the electronic device may display an interface obtained after the display mode of the object window is switched, namely, the third interface. For example, when the preset hot zone is the split-screen hot zone, after the user performs an operation to drag the object window to the split-screen hot zone, the electronic device may display a split-screen preparation interface shown in FIG. 3j or FIG. 3k below. A virtual split-screen window 361 on the split-screen preparation interface 360 shown in FIG. 3j is, for example, the third window, and a to-be-determined window 362 is the second window. Alternatively, a left window 371 on the split-screen preparation interface 370 shown in FIG. 3k is, for example, the third window, and a right window 372 is the second window.

In a possible implementation of the first aspect, a part of the third window is displayed on a display of the electronic device.

For example, a part of the third window may be displayed on the screen of the electronic device with reference to the virtual split-screen window 361 on the split-screen preparation interface 360 shown in FIG. 3j. The user may drag a control bar 363 on the right edge of the virtual split-screen window 361 to slide rightward, to display a larger part of the virtual split-screen window 361.

In a possible implementation of the first aspect, before the displaying a second interface, the method further includes: displaying the entire third window on the display of the electronic device; and automatically moving the third window, to display a part of the third window on the display.

That is, the electronic device may display a dynamic interface change process in response to the first drag operation of the user, so that the user perceives a window display mode switching process. For example, refer to interfaces shown in FIG. 3k and FIG. 3j. In response to the operation of dragging the object window to the split-screen hot zone by the user, the electronic device may first display the split-screen preparation interface 370 shown in FIG. 3k, and then automatically move the left window 371 on the split-screen preparation interface 370 leftward, and finally the electronic device displays a split-screen preparation interface 360 shown in FIG. 3j.

In a possible implementation of the first aspect, a home screen including at least one application icon or task widget is displayed in the second window; and after the displaying a second interface, the method further includes: in response to an operation on an icon or a task widget of a second application on the home screen, starting the second application, and displaying a second application window, where an interface of the second application is displayed in the second application window. The second application window and the third window are displayed in split screen, and when the third window and the second application window are displayed in split screen, the entire third window is displayed on the display.

It may be understood that, in a split-screen mode, display content of two or more windows usually needs to be determined. When the user performs an operation to drag the 1^{st} object window (namely, the first application window) to the split-screen hot zone, the electronic device may first display content (namely, an interface of the first application) in the object window by using one window in a split-screen mode window. When the user selects content (namely, an interface of the second application) to be displayed in the other window in the split-screen mode window, the two pieces of to-be-displayed content selected by the user are separately displayed in the split-screen mode window displayed by the electronic device, that is, the interface of the first application and the interface of the second application are separately displayed in the two windows in the split-screen mode window. The window in which the interface of the first application is displayed is the third window.

In a possible implementation of the first aspect, the method further includes: displaying a third interface in response to the first drag operation, where the third interface includes a second window and a fourth window, and the fourth window is a window obtained after the first application window is displayed in the first mode. The second window is displayed in full screen by the electronic device, the fourth window floats above the second window, both a height and a width of the fourth window are less than a height and a width of the second window, and the entire fourth window is displayed on a display of the electronic device.

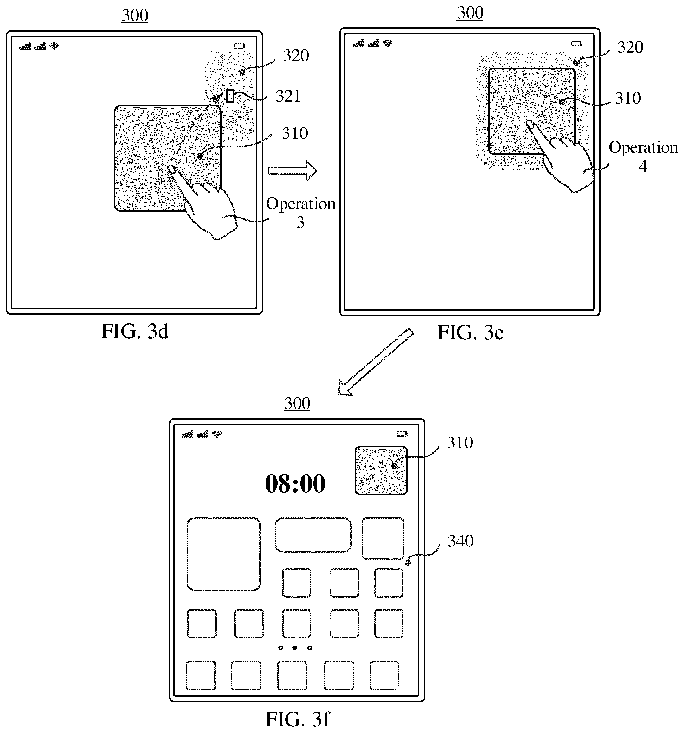

As shown above, the first application window (namely, the object window) is dragged to the first response hot zone (namely, the preset hot zone) through the first drag operation of the user. Therefore, in response to the first drag operation of the user, the electronic device may display an interface obtained after the display mode of the object window is switched, namely, the third interface. For example, when the preset hot zone is a small-window hot zone, after the user drags the object window to the small-window hot zone, the electronic device may display an interface shown in FIG. 3f below. An application window 310 that is shown in FIG. 3f and that is displayed in the floating manner is the fourth window, and an empty window 340 is the second window.

In a possible implementation of the first aspect, a home screen including at least one application icon or task widget is displayed in the second window.

Refer to the interface shown in FIG. 3f. The empty window 340 (namely, the second window) may be a home screen of the electronic device, and there is an application icon, a task widget, or the like on the home screen.

In a possible implementation of the first aspect, after the electronic device displays the first interface, the method further includes: in a process of performing the first drag operation, if a distance between the touch location of the first drag operation and a display location of the first identifier gradually decreases, gradually increasing a size of the first identifier.

A process in which the user drags the first application window (namely, the object window) to approach the location of the first identifier is a process in which the object window approaches the preset hot zone. In this process, the display size of the first identifier may gradually increase. As described above, the first identifier may be a hot zone icon of the preset hot zone, for example, a small-window hot zone icon 321 or a split-screen hot zone icon 331 shown in FIG. 3c. Alternatively, the first identifier may be a hot zone mask of the preset hot zone, for example, a small-window hot zone 320 or a split-screen hot zone 330 shown in FIG. 3c, or the first identifier includes a hot zone icon and a hot zone mask of the preset hot zone. In the process in which the user drags the object window to approach the preset hot zone, a display size of the hot zone icon and/or the hot zone mask of the preset hot zone may correspondingly increase, and a size change amplitude of the hot zone mask may be greater than a size change amplitude of the corresponding hot zone icon.

In a possible implementation of the first aspect, before detecting the first touch operation of the user, the electronic device displays a fifth window in the full screen manner, where the fifth window includes a target object on which the first touch operation is performed. The method includes: detecting the first touch operation of the user, and displaying the target object or an interface corresponding to the target object in the first application window on the first interface.

That is, the object window operated by the user may be a window used to display all or a part of content (namely, the target object) of the fifth window. An operation of switching a window display mode performed by the user on the target object in the fifth window may trigger the electronic device to display, by using the target window (namely, the first application window), the target object operated by the user or the interface corresponding to the target object.

In a possible implementation of the first aspect, the target object includes any one of an application window, an application icon, a service widget, a task window displayed on an application interface, a link displayed on the application interface, an attachment displayed on the application interface, and a task window on a multi-task interface.

For example, when the fifth window is the home screen displayed by the electronic device, the target object may be an application icon, a service widget, or a task widget in the home screen window. If the fifth window is an application window, the target object may be a link, an attachment, a text, or the like displayed in the application window. This is not limited herein.

In a possible implementation of the first aspect, the first touch operation is an upward drag operation on the target object, and when the target object is the fifth window, a start point of the first touch operation is the bottom of the screen of the electronic device.

That is, a result of the first touch operation (for example, an upward slide operation in the following) is dragging the target object upward, for example, dragging the target object to the preset hot zone. If the fifth window is the application window, the upward slide operation of the user may start sliding upward from the bottom of the screen of the electronic device, and is performed on the application window, so that the application window is dragged to the preset hot zone and displayed in a display mode corresponding to the preset hot zone.

In a possible implementation of the first aspect, the detecting a first touch operation of a user, and displaying a first interface includes: In a process of dragging the target object to move upward through the first touch operation, the electronic device displays the first interface when a height of a touch location of the first touch operation reaches a first preset height; or in a process of dragging the target object to move upward through the first touch operation, the electronic device displays the first interface when the target object is the fifth window and a scale-down proportion of a display size of the fifth window reaches a first proportion threshold.

That is, the electronic device may trigger display of the first interface by detecting whether the height of the touch location of the target object operated by the user reaches a preset height threshold (namely, the first preset height); or the electronic device may trigger display of the first interface by detecting whether the scale-down proportion of the object window in which the target object or the interface corresponding to the target object is displayed reaches a preset proportion threshold (for example, the first proportion threshold) in the process of operating the target object to move by the user.

In a possible implementation of the first aspect, the first identifier is displayed one the upper left of the first interface, or the first identifier is displayed on the upper right of the first interface.

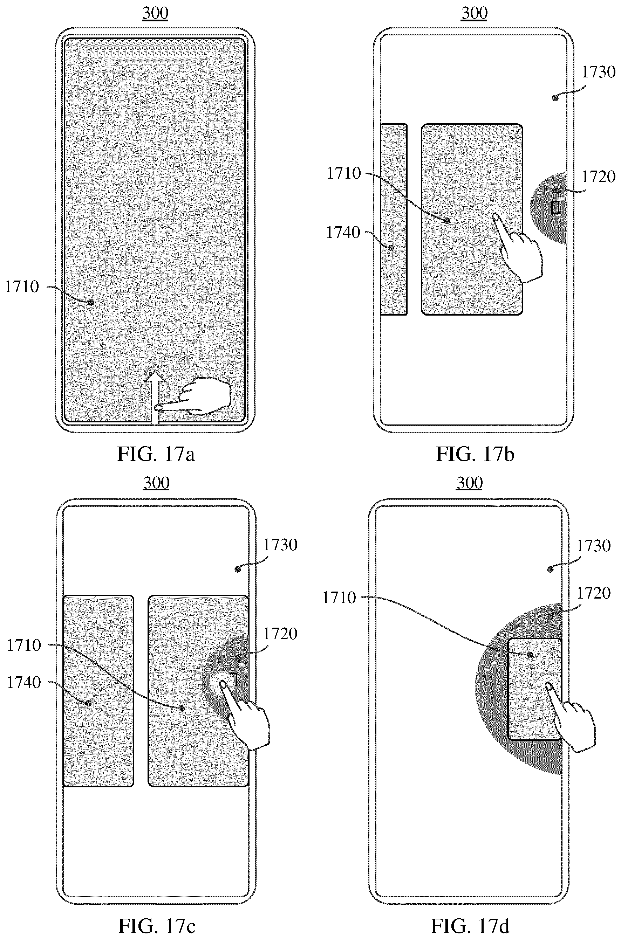

That is, the first identifier may be displayed on the upper left or the upper right of the first interface displayed by the electronic device. In some other embodiments, the first identifier may alternatively be displayed at another location other than the upper left or the upper right of the first interface. For example, as shown in FIG. 3c, the small-window hot zone icon 321 or the small-window hot zone 320 may be displayed on the upper right of the interface shown in FIG. 3c, to indicate a location of the preset small-window hot zone, and the split-screen hot zone icon 331 or the split-screen hot zone 330 may be displayed on the upper left of the interface shown in FIG. 3c, to indicate a location of the preset split-screen hot zone. In addition, refer to FIG. 17b. In the following Embodiment 2, a small-window hot zone 1720 may alternatively be displayed at the right edge of the screen of the electronic device, to indicate the location of the preset small-window hot zone. This is not limited herein.

According to a second aspect, an embodiment of this application provides a window switching method. The method is applied to an electronic device, and includes: detecting a first touch operation of a user, and displaying a first interface, where the first interface includes a first identifier, a second identifier, and at least one application window, the at least one application window includes a first application window, and an interface of a first application is displayed in the first application window; displaying the first application window in a first mode when detecting a first drag operation, where the first drag operation includes an operation of dragging the first application window to a first response region corresponding to the first identifier, and the first response region is located in a display region corresponding to the first interface; and displaying the first application window in a second mode when detecting a second drag operation, where the second drag operation includes an operation of dragging the first application window to a second response region corresponding to the second identifier, the second response region is located in a display region corresponding to the first interface, and the second response region does not overlap the first response region.

That is, two response regions, namely, a first response region and a second response region, may be preset on a screen of the electronic device, and each response region corresponds to a different trigger display mode. That is, the first response region corresponds to triggering a first mode, and the second response region corresponds to triggering a second mode. When the first touch operation of the user is detected, the electronic device may separately display the first identifier and the second identifier to indicate locations of the two preset response regions. The first interface is, for example, an interface shown in FIG. 3c, the first response region is, for example, a split-screen hot zone, and the second response region is, for example, a small-window hot zone. Correspondingly, the first identifier is a split-screen hot zone icon 331 and/or a split-screen hot zone 330 shown in FIG. 3c, and the second identifier is a small-window hot zone icon 321 and/or a small-window hot zone 320 shown in FIG. 3c. Therefore, the first drag operation is an operation of dragging the first application window (namely, an object window) to the split-screen hot zone, and the second drag operation is an operation of dragging the object window to the small-window hot zone.

The first drag operation of dragging the first application window to the first response region corresponding to the first identifier includes: making an entire display region of the first application window located in the first response region; or making a size of an overlapping region between a display region of the first application window and the first response region greater than a preset size threshold; or detecting that a touch location of the first drag operation performed on the first application window is located in a preset hot zone. For example, the drag operation is an operation of making all content displayed in a display region of the object window and a border of the object window located in a preset split-screen hot zone, or an operation of making some content displayed in the object window and a part of a border of the object window located in a preset split-screen hot zone and making a size of an overlapping region between the object window and the split-screen hot zone greater than the preset size threshold; or a touch location of the drag operation is located in the preset hot zone. This is not limited herein.

The second drag operation of dragging the first application window to the second response region corresponding to the second identifier includes: making an entire display region of the first application window located in the second response region; or making a size of an overlapping region between a display region of the first application window and the second response region greater than the preset size threshold. For example, the drag operation is an operation of making all the content displayed in the display region of the object window and the border of the object window located in a preset small-window hot zone, or an operation of making some content displayed in the object window and a part of the border of the object window located in a preset small-window hot zone and making a size of an overlapping region between the object window and the small-window hot zone greater than the preset size threshold; or a touch location of the drag operation is located in the preset hot zone. This is not limited herein.

In embodiments of this application, in an example, whether a height of the touch location meets a preset height threshold condition and/or that the touch location is located on the left side or the right side of the screen of the electronic device may be determined by detecting obtained coordinate information of the touch location of the first drag operation, to determine whether the touch location is located in the preset split-screen hot zone or small-window hot zone. For details, refer to descriptions of a specific implementation process of corresponding steps in a procedure shown in FIG. 5A and FIG. 5B in the following embodiment. Details are not described herein.

In a possible implementation of the second aspect, the method further includes: displaying a second interface in response to the first drag operation, where the second interface includes a second window and a third window, and the third window is a window obtained after the first application window is displayed in the first mode. The third window is displayed above the second window in a floating manner, a height of the third window is equal to a height of the second window, and a width of the third window is less than a width of the second window; or the third window is displayed above the second window in a floating manner, a width of the third window is equal to a width of the second window, and a height of the third window is less than a height of the second window; or the third window and the second window are displayed in split screen, and a height of the third window is equal to a height of the second window or a width of the third window is equal to a width of the second window.

That is, in response to the operation of dragging the object window to the split-screen hot zone by the user, a related interface corresponding to a split-screen mode is displayed, for example, an interface shown in FIG. 3j or FIG. 3k. For details, refer to the foregoing related descriptions. Details are not described herein again.

In a possible implementation of the second aspect, a part of the third window is displayed on a display of the electronic device.

In a possible implementation of the second aspect, before the displaying a second interface, the method further includes: displaying the entire third window on the display of the electronic device; and automatically moving the third window, to display a part of the third window on the display.

That is, in response to the first drag operation of the user, the electronic device may display a dynamic interface change process, so that the user perceives a window display mode switching process. For example, the electronic device first displays the interface shown in FIG. 3k and then changes to display an interface shown in FIG. 3j. For details, refer to the foregoing related descriptions. Details are not described herein again.

In a possible implementation of the second aspect, a home screen including at least one application icon or task widget is displayed in the second window; and after the displaying a second interface, the method further includes: in response to an operation on an icon or a task widget of a second application on the home screen, starting the second application, and displaying a second application window, where an interface of the second application is displayed in the second application window. The second application window and the third window are displayed in split screen, and when the third window and the second application window are displayed in split screen, the entire third window is displayed on the display.

As described above, in the split-screen mode, display content of two or more windows usually needs to be determined. In a process of operating to switch a display mode of an object window to the split-screen mode, the user sequentially selects content to be displayed in the two or more windows of the window in the split-screen mode. For details, refer to the foregoing related descriptions. Details are not described herein again.

In a possible implementation of the second aspect, the method further includes: displaying a third interface in response to the second drag operation, where the third interface includes a second window and a fourth window, and the fourth window is a window obtained after the first application window is displayed in the second mode. The second window is displayed in full screen by the electronic device, the fourth window floats above the second window, both a height and a width of the fourth window are less than a height and a width of the second window, and the entire fourth window is displayed on a display of the electronic device.

In a possible implementation of the second aspect, a home screen including at least one application icon or task widget is displayed in the second window.

That is, in response to the operation of dragging the object window to the small-window hot zone by the user, a related interface corresponding to a split-screen mode is displayed, for example, an interface shown in FIG. 3f. For details, refer to the foregoing related descriptions. Details are not described herein again.

In a possible implementation of the second aspect, after the electronic device displays the first interface, the method further includes: in a process of performing the first drag operation, if a distance between the touch location of the first drag operation and a display location of the first identifier gradually decreases, gradually increasing a size of the first identifier; or in a process of performing the second drag operation, if a distance between a touch location of the second drag operation and a display location of the second identifier gradually decreases, gradually increasing a size of the second identifier.

That is, a process in which the user drags the first application window (namely, the object window) to approach the location of the first identifier or the location of the second identifier is a process in which the object window approaches the preset hot zone. In this process, a display size of the first identifier or the second identifier in the preset hot zone to which the object window approaches may gradually increase. For details, refer to the foregoing related descriptions about the gradually increasing display size of the first identifier. Details are not described herein again.

In a possible implementation of the second aspect, before detecting the first touch operation of the user, the electronic device displays a fifth window in the full screen manner, where the fifth window includes a target object on which the first touch operation is performed. The method includes: detecting the first touch operation of the user, and displaying the target object or an interface corresponding to the target object in the first application window on the first interface.

In a possible implementation of the second aspect, the target object includes any one of an application window, an application icon, a service widget, a task window displayed on an application interface, a link displayed on the application interface, an attachment displayed on the application interface, and a task window on a multi-task interface.

That is, the object window operated by the user may be a window used to display all or a part of content (namely, the target object) of the fifth window. An operation of switching a window display mode performed by the user on the target object in the fifth window may trigger the electronic device to display, by using the target window (namely, the first application window), the target object operated by the user or the interface corresponding to the target object. For details, refer to the foregoing related descriptions. Details are not described herein again.

In a possible implementation of the second aspect, the first touch operation is an upward drag operation on the target object, and when the target object is the fifth window, a start point of the first touch operation is the bottom of the screen of the electronic device.

In a possible implementation of the second aspect, the detecting a first touch operation of a user, and displaying a first interface includes: In a process of dragging the target object to move upward through the first touch operation, the electronic device displays the first interface when a height of a touch location of the first touch operation reaches a first preset height; or in a process of dragging the target object to move upward through the first touch operation, the electronic device displays the first interface when the target object is the fifth window and a scale-down proportion of a display size of the fifth window reaches a first proportion threshold.

That is, the electronic device may trigger display of the first interface by detecting whether the height of the touch location of the target object operated by the user reaches the first preset height, or may trigger display of the first interface by detecting whether a scale-down proportion of the object window in which the target object or the interface corresponding to the target object is displayed reaches a first proportion threshold in the process of operating the target object to move by the user. For details, refer to the foregoing related descriptions. Details are not described herein again.

It may be understood that in some embodiments, in a process in which the user operates to continuously drag the target object to the preset split-screen hot zone, the electronic device may further trigger display of a split-screen effect simulation interface by determining whether the height of the touch location reaches a second preset height, where the second preset height is greater than the first preset height.

In some other embodiments, in a process in which the user operates to continuously drag the target object to the preset split-screen hot zone, the electronic device may further trigger display of a split-screen effect simulation interface by determining whether the scale-down proportion of the object window in which the target object or an interface corresponding to the target object is displayed reaches a second proportion threshold, where the second proportion threshold is greater than the first proportion threshold.

In a possible implementation of the second aspect, the first drag operation and the first touch operation are one continuous operation; or the second drag operation and the first touch operation are one continuous operation.

The foregoing continuous operation indicates that a finger does not leave the screen of the electronic device in a process in which the user performs the first touch operation and the first drag operation, or a finger does not leave the screen of the electronic device in a process in which the user performs the first touch operation and the second drag operation.

In a possible implementation of the second aspect, the first identifier is displayed one the upper left of the first interface, and the second identifier is displayed on the upper right of the first interface; or the first identifier is displayed at the upper right of the first interface, and the second identifier is displayed on the upper left of the first interface.

For example, the small-window hot zone 320 and the small-window hot zone icon 321 shown in FIG. 3c are displayed on the upper right of the screen, and the split-screen hot zone 330 and the split-screen hot zone icon 331 are displayed on the upper left of the screen. In some other embodiments, the small-window hot zone 320 and/or the small-window hot zone icon 321 may be displayed on the upper left of the screen of the electronic device, and the split-screen hot zone 330 and/or the split-screen hot zone icon 331 may be displayed on the upper right of the screen of the electronic device. This is not limited herein.

According to a third aspect, an embodiment of this application provides an electronic device. The electronic device includes one or more processors and one or more memories. The one or more memories store one or more programs, and when the one or more programs are executed by the one or more processors, the electronic device performs the foregoing window switching method.

According to a fifth aspect, an embodiment of this application provides a computer program product. The computer program product includes a computer program/instructions. When the computer program/instructions are executed by a processor, the foregoing window switching method is executed.

### BRIEF DESCRIPTION OF DRAWINGS

FIG. 1a to FIG. 1d are schematic diagrams of interfaces in an existing operation process of switching a window display mode;
FIG. 2a to FIG. 2c are schematic diagrams of interfaces in another existing operation process of switching a window display mode;
FIG. 3a to FIG. 3m are schematic diagrams of some interfaces in a window switching process according to an embodiment of this application;
FIG. 3n to FIG. 3p are schematic diagrams of some interfaces for adjusting a layout of split-screen mode windows according to an embodiment of this application;
FIG. 4 is a schematic diagram of a hardware structure of an electronic device 300 according to an embodiment of this application;
FIG. 5A and FIG. 5B are a schematic diagram of an implementation procedure of a window switching method according to Embodiment 1 of this application;
FIG. 6a to FIG. 6c are schematic diagrams of touch locations corresponding to a user operation according to Embodiment 1 of this application;
FIG. 7a to FIG. 7f are schematic diagrams of some interfaces in a window switching process according to Embodiment 1 of this application;
FIG. 8a to FIG. 8d are schematic diagrams of some other interfaces in a window switching process according to Embodiment 1 of this application;
FIG. 9a and FIG. 9b are schematic diagrams of some other interfaces in a window switching process according to Embodiment 1 of this application;
FIG. 10a to FIG. 10d are schematic diagrams of some other interfaces in a window switching process according to Embodiment 1 of this application;
FIG. 11a to FIG. 11d are schematic diagrams of some other interfaces in a window switching process according to Embodiment 1 of this application;
FIG. 12a to FIG. 12d are schematic diagrams of some other interfaces in a window switching process according to Embodiment 1 of this application;
FIG. 13a to FIG. 13d are schematic diagrams of some other interfaces in a window switching process according to Embodiment 1 of this application;
FIG. 14 is a schematic diagram of an interface corresponding to a window switching operation according to Embodiment 1 of this application;
FIG. 15a and FIG. 15b are schematic diagrams of interfaces of layout styles of some split-screen windows according to Embodiment 1 of this application;
FIG. 16 is a schematic diagram of an implementation procedure of another window switching method according to Embodiment 2 of this application;
FIG. 17a to FIG. 17e are schematic diagrams of some interfaces in a window switching process according to Embodiment 2 of this application;
FIG 18 is a block diagram of a software structure of an electronic device 300 according to an embodiment of this application; and
FIG. 19 is a schematic diagram of a process of interaction between user behavior and system behavior of an electronic device 300 according to an embodiment of this application. Embodiment 2 is not covered by the claims.

### DESCRIPTION OF EMBODIMENTS

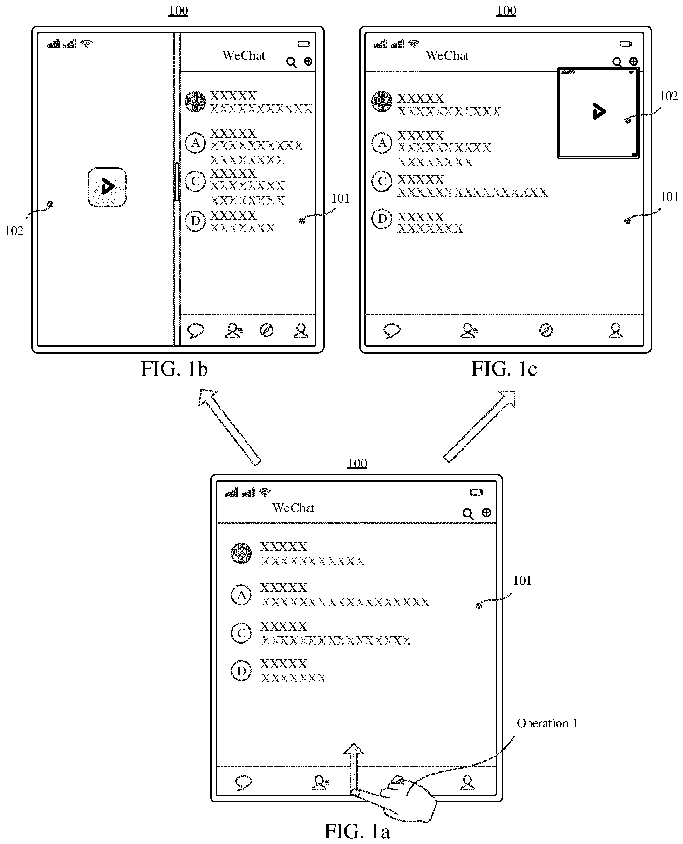

In an example, FIG. 1a to FIG. 1c are schematic diagrams of interfaces in an existing operation process of window switching.

As shown in FIG. 1a, a foldable mobile phone 100 displays an interface 101 of a WeChat^{™} application in a full-screen mode. When a user wants to receive and send messages on WeChat while watching a video, the user may operate the foldable mobile phone 100 to switch to display a split-screen mode window shown in FIG. 1b. The foldable mobile phone 100 respectively displays the interface 101 of the WeChat^{™} application and an interface 102 of a video application in two windows in a split-screen mode. When the user wants to temporarily collapse the interface 102 of the video application to first process a WeChat^{™} message, the user may operate the foldable mobile phone 100 to switch the interface 102 of the video application to a small-window mode window shown in FIG. 1c for display, that is, the foldable mobile phone 100 displays the interface 102 of the video application in the small-window mode window. In this case, the interface 101 of the WeChat^{™} application is displayed below the small-window mode window in full screen. It may be understood that, in the descriptions of embodiments of this application, full-screen display means that an entire screen display region of an electronic device 300 is used for displaying content of a home screen or an application window, or an entire screen display region of an electronic device is a display region of a home screen or an application window.

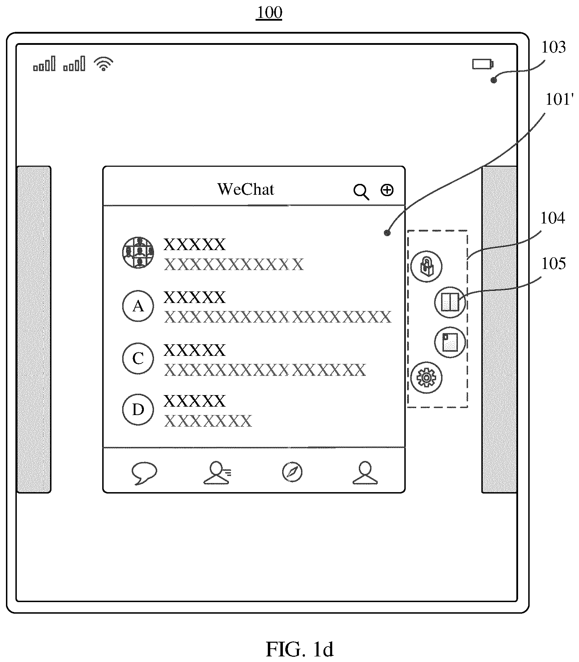

Specifically, in a process in which the user operates the foldable mobile phone 100 to switch from a full-screen mode window shown in FIG. 1a to the split-screen mode window shown in FIG. 1b, the user needs to first slide up from the bottom of a screen shown in FIG. 1a (referring to an operation 1 shown in FIG. 1a) to enter a multi-task interface 103 shown in FIG. 1d, then tap an interface 101' of the WeChat^{™} application on the multi-task interface 103 to open a multi-mode window option button 104, tap a split-screen mode button 105 from the multi-mode window option button 104 to enable the foldable mobile phone 100 to enter a split-screen mode, and finally select the interface of the video application as an interface displayed in the other window in the split-screen mode, to enter the split-screen mode window shown in FIG. 1b. It can be learned that an operation process of switching a window display mode is complex currently, resulting in low operation efficiency of switching the window display mode by the user and poor experience.

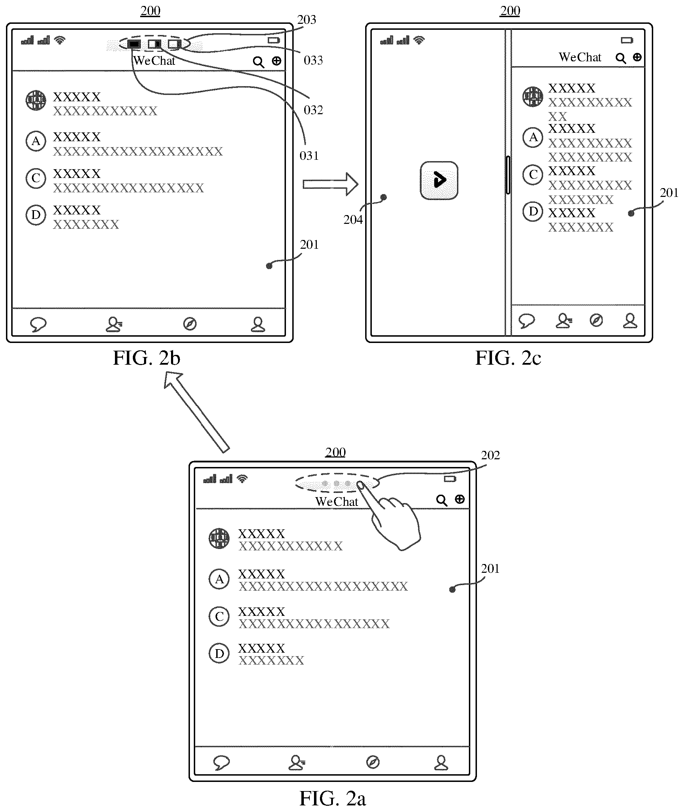

FIG. 2a to FIG. 2c are schematic diagrams of interfaces in another existing operation process of switching a window display mode.

As shown in FIG. 2a, a tablet computer 200 displays an application window. The application window may be, for example, a WeChat^{™} window 201. A touch hot zone 202 for switching a window display mode is displayed on the top of the WeChat^{™} window 201. A user may tap the touch hot zone 202 to open a mode option 203 shown in FIG. 2b.

As shown in FIG. 2b, the mode option 203 includes a full-screen mode button 031, a split-screen mode button 032, and a small-window mode button 033. It may be understood that, in some other embodiments, a small-window mode may also be referred to as a floating window mode. The user may tap the split-screen mode button 032 in the mode option 203 shown in FIG. 2b to enter a split-screen mode window shown in FIG. 2c. As shown in FIG. 2c, content in the WeChat^{™} window 201 is displayed in one window of the split-screen mode window, and an interface of another recently opened application, for example, an interface 204 of a video application, may be displayed in the other window of the split-screen mode window.

However, when operating the tablet computer 200 to switch from a full-screen mode window shown in FIG. 2a to the split-screen mode window shown in FIG. 2c, the user also needs to perform a plurality of operations. Consequently, operation efficiency is low, and user experience is also poor.

To resolve a problem that operation steps for switching a window display mode are complex and user operation efficiency is low, an embodiment of this application provides a window switching method. A hot zone (referred to as a small-window hot zone below) for triggering a small-window mode and/or a hot zone (referred to as a split-screen hot zone below) for triggering a split-screen mode are/is set on an electronic device. When it is detected that a user drags an object window to a preset hot zone, the electronic device is triggered to switch a display mode of the object window to a display mode corresponding to the preset hot zone. For example, when it is detected that the user drags the object window to a preset split-screen hot zone, the electronic device is triggered to switch the display mode of the object window to the split-screen mode. An operation of dragging the object window to the preset hot zone by the user may be, for example, a preset sliding operation gesture, for example, a sliding operation like touching and holding and dragging the window on a screen of the electronic device or sliding upward from the bottom of a screen to drag the window upward. According to the window switching solution provided in this embodiment of this application, the display mode of the object window displayed by the electronic device can be switched to the split-screen mode through one operation (namely, a one-step split-screen operation process) or to the small-window mode through one operation (namely, a one-step small-window operation process). This simplifies operation steps of switching a window display mode by a user, improves operation efficiency of window switching by the user, and improves user experience.

It may be understood that the object window may be an application window for displaying an application interface, or a video task window, an access link, a text, an attachment, or the like displayed on an application interface, or may be an application icon displayed on a home screen of the electronic device, a service widget, a task widget displayed on a multi-task interface of the electronic device, or the like. This is not limited herein. The operation of dragging the object window to the preset hot zone includes: dragging the object window to make an entire display region, a border part, and the like of the object window in the preset hot zone or make a size of an overlapping region between a display region of the object window and the preset hot zone greater than a preset size threshold, for example, make an area of the overlapping region greater than a preset area threshold, or detecting that a touch location of the operation of dragging the object window to the preset hot zone is within the preset hot zone. This is not limited herein.

For example, FIG. 3a to FIG. 3m are schematic diagrams of some interfaces in a process of a window switching method implemented by an electronic device 300 according to an embodiment of this application.

FIG. 3a to FIG. 3c show a scenario of triggering display of a small-window hot zone location and/or a split-screen hot zone location.

Refer to an operation 2 shown in FIG. 3a. A user may slide up (namely, a slide-up operation) from a bottom of a screen of the electronic device 300 that displays an application interface in full screen. Refer to FIG. 3b. In a slide-up operation process of the user, an application window 310 of the application interface displayed by the electronic device 300 gradually decreases. Further refer to FIG. 3c. When the application window 310 is scaled down to a specified extent in the slide-up operation process of the user, the electronic device 300 may display a hot zone mask above a preset small-window hot zone and/or split-screen hot zone on the screen, to indicate a location of the preset hot zone. It may be understood that a size of the hot zone that is set on the screen of the electronic device 300 may be fixed, but a size of the hot zone mask displayed above the hot zone may change, to guide the user to drag the application window 310 to a corresponding preset hot zone range. A maximum size of the hot zone mask may be equal to the size of the preset hot zone, or may be slightly smaller than the size of the preset hot zone. This is not limited herein. For ease of description, a small-window hot zone 320 shown in FIG. 3c may be understood as a hot zone mask above the small-window hot zone, and a split-screen hot zone 330 may be understood as a hot zone mask above the split-screen hot zone. Unless otherwise specified, in the following descriptions, the small-window hot zone or the split-screen hot zone and the corresponding hot zone mask are generally not distinguished.

In some other embodiments, the size of the hot zone may also change. For example, it may be set that the size of the hot zone and the size of the corresponding hot zone mask change synchronously and proportionally. This is not limited herein.

It may be understood that, in some embodiments, an operation of dragging the application window 310 (namely, an object window) to the corresponding preset hot zone range may alternatively be an operation of dragging the object window to a region covered by the hot zone mask displayed above the preset hot zone. The operation includes: dragging the object window to make an entire display region, a window border, and the like of the object window in the region covered by the hot zone mask displayed above the preset hot zone or make a size of an overlapping region between a display region of the object window and the region covered by the hot zone mask displayed above the preset hot zone greater than a preset size threshold, for example, make an area of the overlapping region greater than a preset area threshold, or detecting that a touch location of the operation of dragging the object window to the preset hot zone is within a range covered by the hot zone mask displayed above the preset hot zone. This is not limited herein. In some embodiments of this application, whether a height of the touch location meets a preset height threshold condition may be determined and/or that the touch location is located on the screen of the electronic device may be determined by detecting obtained coordinate information of the touch location of the operation of dragging the object window, to determine whether the touch location is located in the range covered by the hot zone mask displayed above the preset hot zone. For details, refer to descriptions of a specific implementation process of a corresponding step in a procedure shown in FIG. 5A and FIG. 5B in the following embodiment. Details are not described herein.

Still refer to FIG. 3c. Triggering of the small-window hot zone 320 and the split-screen hot zone 330 is displayed. The user may continue to drag the application window 310 to the upper right, and release a finger when the application window 310 slides to the small-window hot zone 320, to trigger a small-window mode. Alternatively, the user may drag the application window 310 to the upper left, and release a finger when the application window 310 slides to the split-screen hot zone 330, to trigger a split-screen mode. Details are separately described below, and details are not described herein. In addition, as shown in FIG. 3c, a small-window hot zone icon 321 may be displayed in the small-window hot zone 320, and a split-screen hot zone icon 331 may be displayed in the split-screen hot zone 330, to indicate the small-window hot zone and the split-screen hot zone. A display size corresponding to each of the small-window hot zone 320 and the split-screen hot zone 330 may be greater than a display size of a preset hot zone icon.

It may be understood that, in some other embodiments, only the small-window hot zone 320 or the split-screen hot zone 330 may be set on the screen of the electronic device 300. In this case, when the user performs the slide-up operation on the application window 310 on the screen of the electronic device 300, only the small-window hot zone icon 321 or the split-screen hot zone icon 331 may be correspondingly displayed on an interface shown in FIG. 3c. In some other embodiments, locations of the small-window hot zone icon 321 and the corresponding small-window hot zone 320, and the split-screen hot zone icon 331 and the corresponding split-screen hot zone 330 shown in FIG. 3c may also be interchanged. That is, the small-window hot zone icon 321 is displayed on the upper left of the screen of the electronic device 300 to indicate the location of the small-window hot zone 320, and the split-screen hot zone icon 331 is displayed on the upper right of the screen of the electronic device 300 to indicate the location of the split-screen hot zone 330. On the interface shown in FIG. 3c, other application windows on the two sides of the application window 310 may be hidden. This is not limited herein.

FIG. 3d to FIG. 3f show an operation scenario of switching to a small-window mode window.

Refer to an operation 3 shown in FIG. 3d. In a process in which the user drags the application window 310 to slide to the small-window hot zone 320 on the upper right of the screen of the electronic device 300, the display size of the small-window hot zone 320 may gradually increase. Optionally, the small-window hot zone icon 321 in the small-window hot zone 320 may also correspondingly increase. A change rate of a display size of the small-window hot zone icon 321 may be less than a change rate of the display size of the small-window hot zone 320. In addition, as shown in FIG. 3d, the size of the application window 310 may further decrease. In this case, the split-screen hot zone and the split-screen hot zone icon on the upper left of the screen of the electronic device 300 may be hidden and not displayed. This is not limited herein.

Refer to an operation 4 shown in FIG. 3e. The user may completely drag the application window 310 to the small-window hot zone 320. For example, an entire display region of the application window 310 is completely within a region covered by the small-window hot zone 320 displayed by the electronic device 300. In a process in which the application window 310 is moved to the small-window hot zone 320, the display size of the small-window hot zone 320 (namely, a size of the region covered by the small-window hot zone 320) may further increase, the application window 310 may also gradually block the small-window hot zone icon displayed in the small-window hot zone 320, and the small-window hot zone icon may also be displayed with a border in bold or displayed in another eye-catching change. It may be understood that, in FIG. 3e, effect of displaying the small-window hot zone icon 321 with the border in bold is not shown because of blocking of the application window 310. When the user releases the finger in the small-window hot zone 320 to release the application window 310 located in the small-window hot zone 320, the application window 310 may be triggered to be displayed as a small-window mode window, that is, the electronic device 300 is triggered to display an interface shown in FIG. 3f.

Refer to FIG. 3f. After the user releases the finger in the small-window hot zone 320 to release the application window 310, the application window 310 in the small-window mode may be displayed on the upper right of the electronic device 300. In this case, a home screen or an interface of another application may be displayed in an empty window 340 on the screen of the electronic device 300, that is, the application window 310 in the small-window mode is displayed, in a floating manner, above the home screen or the interface of the another application that is displayed in the empty window 340.

It may be understood that the application window 310 shown in FIG. 3a to FIG. 3f may be a window for displaying an interface of any application installed on the electronic device 300. For example, the application window 310 may be a WeChat^{™} application window or a video application window. This is not limited herein.

It may be understood that the interface change processes corresponding to the operation 3 shown in FIG. 3d and the operation 4 shown in FIG. 3e are reversible. That is, after performing the operation 3 shown in FIG. 3d or the operation 4 shown in FIG. 3e, the user may perform a sliding operation in a reverse direction corresponding to the operation 3 or the operation 4 to return to an interface before the small-window mode is triggered. For example, the user performs the sliding operation in the reverse direction corresponding to the operation 3 shown in FIG. 3d, for example, an operation of sliding down to return to the bottom of the screen of the electronic device 300. In this way, the electronic device 300 may be enabled to gradually switch from the interface shown in FIG. 3d to the interface shown in FIG. 3c, the interface shown in FIG. 3b, and the interface shown in FIG. 3a. This is not limited herein.

FIG. 3g to FIG. 3j show a scenario of switching to a split-screen mode window.

Refer to an operation 5 shown in FIG. 3g. In a process in which the user drags the application window 310 to slide to the split-screen hot zone 330 on the upper left of the screen of the electronic device 300, the display size of the split-screen hot zone 330 may gradually increase. Optionally, the split-screen hot zone icon 331 in the split-screen hot zone 330 may also correspondingly increase. The change rate of the display size of the split-screen hot zone icon 331 may be less than the change rate of the display size of the split-screen hot zone 330. In addition, as shown in FIG. 3g, the size of the application window 310 may further decrease. In this case, the small-window hot zone and the small-window hot zone icon on the upper right of the screen of the electronic device 300 may be hidden and not displayed. This is not limited herein.

Refer to an operation 6 shown in FIG. 3h. The user may completely drag the application window 310 to the split-screen hot zone 330. For example, an entire display region of the application window 310 is completely within a region covered by the split-screen hot zone 330 displayed by the electronic device 300. In a process in which the application window 310 is moved to the split-screen hot zone 330, the display size of the split-screen hot zone 330 (namely, a size of the region covered by the split-screen hot zone 330) may further increase, the application window 310 may also gradually block the split-screen hot zone icon displayed in the split-screen hot zone 330, and the split-screen hot zone icon may also be displayed with a border in bold or displayed in another eye-catching change. It may be understood that, in FIG. 3h, effect of displaying the split-screen hot zone icon 321 with the border in bold is not shown because of blocking of the application window 310.

In some other embodiments, when the application window 310 is completely dragged to the split-screen hot zone 330, the electronic device 300 may alternatively display a simulated split-screen interface shown in FIG. 3i.

Refer to FIG. 3i. In the simulated split-screen interface 350 displayed by the electronic device 300, display content in the application window 310 may be displayed through a left window 351 of the simulated split-screen interface 350. In this case, in the left window 351, content in the application window 310 in a selected state is highlighted in a dark background relative to the left window 351. The right window 352 of the simulated split-screen interface 350 may be displayed as a window interface state of to-be-added display content. It may be understood that, when the electronic device 300 displays the simulated split-screen interface 350, a status bar on the top of the electronic device 300 may be covered by the displayed simulated split-screen interface 350. This is not limited herein. In some other embodiments, a style of the simulated split-screen window displayed by the electronic device 300 may alternatively be another style. This is not limited herein.

Further, when the user releases the finger in the split-screen hot zone 330 to release the application window 310 located in the split-screen hot zone 330, the application window 310 may be triggered to be displayed as a split-screen mode window. It may be understood that the split-screen interface displayed by the electronic device 300 generally includes two or more split-screen windows for displaying application interfaces. The application interfaces displayed in the split-screen windows may be different interfaces of a same application, or may be interfaces of different applications. This is not limited herein. It may be understood that, when the user completes, for the first time, the operation of releasing the finger in the split-screen hot zone 330 to release the application window 310, the electronic device 300 may display a preparation interface in the split-screen mode, for example, an interface shown in FIG. 3j, before displaying a final split-screen interface.

Refer to FIG. 3j. When the user completes, for the first time, the operation of releasing the finger in the split-screen hot zone 330 to release the application window 310, the electronic device 300 may display a split-screen preparation interface 360. The split-screen preparation interface 360 may be understood as a preparation interface before the split-screen interface is entered. As shown in FIG. 3j, the split-screen preparation interface 360 includes a virtual split-screen window 361 on the left edge and a to-be-determined window 362. The virtual split-screen window 361 may be displayed above the to-be-determined window 362 in the floating manner. The virtual split-screen window 361 is used for displaying the content in the application window 310, for example, displaying an interface of a WeChat^{™} application displayed in the example application window 310. The to-be-determined window 362 may be used for displaying a home screen or another application interface that is selected by the user, for example, displaying a video playing interface that forms a split-screen interface with the interface of the WeChat^{™} application. This is not limited herein.

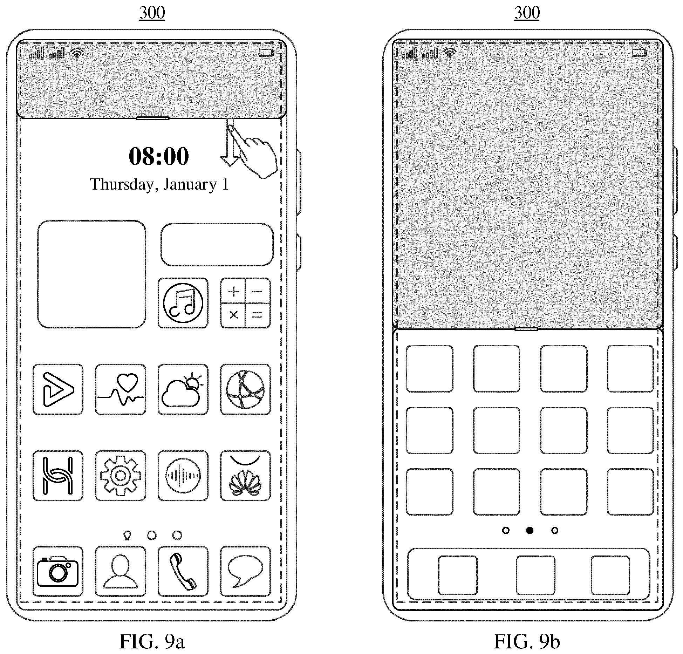

In some other embodiments, the virtual split-screen window 361 shown in FIG. 3j may alternatively be displayed on the right edge of the split-screen preparation interface 360, or on the top of the split-screen preparation interface 360, for example, displayed as a style of an interface shown in FIG. 9a below. This is not limited herein.

It may be understood that the virtual split-screen window 361 shown in FIG. 3j may be folded toward the left side of the screen of the electronic device 300. For example, the user may drag a control bar 363 at the right edge of the virtual split-screen window 361 to slide rightward, to expand the virtual split-screen window 361 rightward, so as to expand a display size of the virtual split-screen window 361. It may be understood that, in some other embodiments, the user may alternatively drag a right edge location of a control bar 363 rightward to expand the virtual split-screen window 361 rightward. This is not limited herein.

It may be understood that the user may release the finger in the left window 351 of the simulated split-screen interface 350 shown in FIG. 3i to release the application window 310, to trigger the electronic device 300 to display the split-screen preparation interface 360 shown in FIG. 3j, or the user may release the finger in the split-screen hot zone 330 shown in FIG. 3h to release the application window 310, to trigger the electronic device 300 to display the split-screen preparation interface 360 shown in FIG. 3j. This is not limited herein.

In some other embodiments, the split-screen preparation interface displayed by the electronic device 300 triggered by an operation of releasing the application window 310 by the user may be in another interface form different from that shown in FIG. 3j, for example, may be in forms of split-screen preparation interfaces shown in FIG. 3k and FIG. 3l. This is not limited herein.

Refer to FIG. 3k. On a split-screen preparation interface 370 displayed by the electronic device 300, a left window 371 may be used for displaying the content in the application window 310, and a right window 372 may be used for displaying the home screen or another application interface selected by the user. Because display content in the right window 372 shown in FIG. 3k is to be determined, the right window 372 may also be referred to as a to-be-determined window 372 in the following descriptions.

It may be understood that, in some embodiments, when the user may release the application window 310 in the split-screen hot zone 330 shown in FIG. 3h or in the left window 351 of the simulated split-screen interface 350 shown in FIG. 3i, the electronic device 300 may display an interface change process from the interface shown in FIG. 3k to the interface shown in FIG. 3j, that is, the electronic device 300 may first display the split-screen preparation interface 370 shown in FIG. 3k. Then, the left window 371 of the split-screen preparation interface 370 displayed by the electronic device 300 automatically moves leftward until the electronic device 300 displays the split-screen preparation interface 360 shown in FIG. 3j. This is not limited herein.

Refer to FIG. 3l. A split-screen preparation interface 380 displayed by the electronic device 300 includes a split-screen effect window 381 displayed on the upper left of the screen. The split-screen preparation interface 380 further includes a to-be-determined window 382 that may be used for displaying the home screen or another application interface. A dark mode window 383 in the split-screen effect window 381 is, for example, a window that is selected by the user and that is used for displaying the content of the application window 310, and a blank window 384 in the split-screen effect window 381 may be used for displaying another corresponding application interface selected by the user through a next operation of triggering the split-screen mode. It may be understood that, when the user performs another operation of triggering the split-screen mode, namely, one of the operations in FIG. 3a to FIG. 3c, and FIG. 3g to FIG. 3h or FIG. 3i, and selects another application interface as content that is displayed, on a split-screen interface, together with the content displayed in the application window 310, the electronic device 300 may display a final split-screen interface, for example, a split-screen interface 390 shown in FIG. 3m. A left window 391 and a right window 392 are displayed in split screen.

In addition, on the split-screen preparation interface 380 shown in FIG. 3l, the user may further perform a sliding operation in the split-screen effect window 381 displayed on the upper left of the screen, to adjust a layout style of the split-screen window.

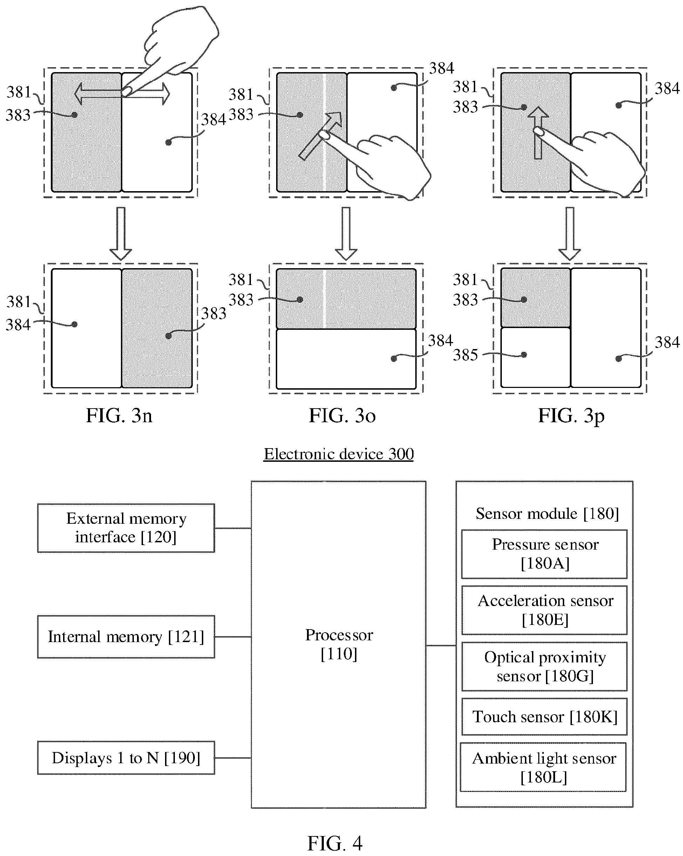

FIG. 3n to FIG. 3p are schematic diagrams of several interfaces for adjusting a layout of split-screen mode windows by performing the sliding operation in the split-screen effect window displayed by the electronic device 300 according to an embodiment of this application. It may be understood that, after the user performs the sliding operation in the split-screen effect window 381 to adjust the layout of the split-screen mode windows, the split-screen interface finally displayed by the electronic device 300 after the user completes a plurality of corresponding operations of triggering the split-screen mode is displayed in an adjusted layout style of the split-screen mode windows.

Refer to FIG. 3n. For example, the user may slide left and right in the split-screen effect window 381, and may switch between left and right display locations of the dark mode window 383 and the blank window 384.

Refer to FIG. 3o. For example, the user may slide from the left dark mode window 383 of the split-screen effect window 381 to the upper right, and may switch a window layout of the dark mode window 383 and the blank window 384 in left and right directions to a window layout in upper and lower directions. For example, the dark mode window 383 is switched to the upper of the blank window 384 for display. This is not limited herein. It may be understood that the split-screen effect window 381 having the two windows shown in FIG. 3n and FIG. 3o may be referred to as a two-split screen effect window. If there are three or more windows in the split-screen effect window 381 displayed by the electronic device 300, the split-screen effect window 381 may be referred to as a three-split screen effect window or a multi-split screen effect window. For details, refer to an interface shown in FIG. 3p.

Refer to FIG. 3p. For example, the user may slide the left dark mode window 383 of the split-screen effect window 381 upward, and may move the dark mode window 383 upward and add a blank window 385, to form a three-split screen effect window together with the blank window 384. In some other embodiments, the user may also switch the split-screen effect window 381 to another form of a two-split screen effect window, a three-split screen effect window, a multi-split screen effect window, or the like by performing a sliding operation in the split-screen effect window 381. This is not limited herein.

It may be understood that, when the user completes only an operation of switching the 1^{st} application window to the split-screen mode window, on the split-screen preparation interface shown in FIG. 3j to FIG. 3l, after the user completes selection of the content that is to be displayed in another to-be-determined window 362, 372, or 382 in the split-screen mode window, for example, after the user selects another application from application icons on the home screen displayed in the to-be-determined window 382, if the user selects, for example, a video application, when the user taps a selected video application icon, the split-screen preparation interface displayed by the electronic device 300 is automatically switched to a style of a split-screen interface. For the style of the split-screen interface, refer to the split-screen interface 390 shown in FIG. 3m. Content in the 1^{st} application window operated by the user, for example, a WeChat^{™} interface, is displayed in the left window 391 of the split-screen interface 390 shown in FIG. 3m. An interface of the video application selected by the user is displayed in the right window of the split-screen interface 390 shown in FIG. 3m. The left window 391 of the WeChat^{™} interface and the right window 392 of the interface that displays the video application are displayed in split screen. In some other embodiments, after the electronic device 300 displays the split-screen preparation interface, when the user taps another application on the home screen, the split-screen interface displayed by the electronic device 300 may alternatively be displayed in another style. This is not limited herein.

It may be understood that the electronic device 300 that implements the window switching solution in embodiments of this application includes but is not limited to various electronic devices such as a mobile phone (including a foldable mobile phone), a tablet computer, a laptop computer, a home screen computer, a server, a wearable device, a head-mounted display, a mobile email device, a head unit, a portable game console, a portable music player, a reader device, and a television in which one or more processors are embedded or coupled.

For example, FIG. 4 is a schematic diagram of a hardware structure of the electronic device 300.

As shown in FIG. 4, the electronic device 300 may include a processor 110, an external memory interface 120, an internal memory 121, a sensor module 180, a display 190, and the like. The sensor module 180 may include a pressure sensor 180A, an acceleration sensor 180E, an optical proximity sensor 180G, a touch sensor 180K, an ambient light sensor 180L, and the like.

It may be understood that the structure shown in embodiments of this application does not constitute a specific limitation on the electronic device 300. In some other embodiments of this application, the electronic device 300 may include more or fewer components than those shown in the figure, or combine some of the components, or split some of the components, or have a different component arrangement. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal based on instruction operation code and a time sequence signal, to complete control of instruction fetching and instruction execution. A memory may further be disposed in the processor 110, and is configured to store instructions and data. In embodiments of this application, related instructions and data for performing the window switching method in this application may be stored in the memory, and are invoked by the processor 110. The processor 110 may control, by using the controller, to perform steps of implementing the window switching method. A specific implementation process is described in detail below. Details are not described herein.

In some embodiments, the processor 110 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 300.

The MIPI interface may be configured to connect the processor 110 to a peripheral component, for example, the display 190. The MIPI interface includes a camera serial interface (camera serial interface, CSI), a display serial interface (display serial interface, DSI), and the like. The processor 110 communicates with the display 190 through the DSI interface, to implement a display function of the electronic device 300.

The GPIO interface may be configured by software. The GPIO interface may be configured for control signals or data signals. In some embodiments, the GPIO interface may be configured to connect to the processor 110, the display 190, the sensor module 180, and the like. The GPIO interface may be further configured as an I2C interface, an MIPI interface, or the like.

It may be understood that an interface connection relationship between the modules shown in embodiments of this application is merely an example for description, and constitutes no limitation on the structure of the electronic device 300. In some other embodiments of this application, the electronic device 300 may alternatively use an interface connection manner different from that in the foregoing embodiment, or use a combination of a plurality of interface connection manners.

The electronic device 300 implements a display function through the GPU, the display 190, the application processor, and the like. The GPU is a microprocessor for image processing, and is connected to the display 190 and the application processor. The GPU is configured to perform mathematical and geometric computation, and render an image. The processor 110 may include one or more GPUs, which execute program instructions to generate or change display information.

The display 190 is configured to display an image, a video, and the like. The display 190 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Mini-LED, a Micro-LED, a Micro-OLED, quantum dot light emitting diodes (quantum dot light emitting diodes, QLED), or the like. In some embodiments, the electronic device 300 may include one or N displays 190, where N is a positive integer greater than 1. In embodiments of this application, a split-screen hot zone and/or a small-window hot zone may be disposed on the display 190, to respond to a related operation of sliding a finger of a user to the split-screen hot zone or the small-window hot zone. For example, the split-screen hot zone is set in an upper left region of the display 190, and the small-window hot zone is set in an upper right region of the display 190, or the split-screen hot zone may be set in an upper right region of the display 190, and the small-window hot zone is set in an upper left region of the display 190. For details, refer to the following detailed descriptions. Details are not described herein.

The external memory interface 120 may be configured to connect to an external memory card, for example, a micro SD card, to extend a storage capability of the electronic device 300. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 300. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 300.

In embodiments of this application, the internal memory 121 may store execution instructions for implementing the window switching method in this application, so that the processor 110 invokes the instructions to implement the window switching method in this application, to enable the electronic device 300 to implement a function of quickly switching a window display mode.

The pressure sensor 180A is configured to sense a pressure signal, and can convert the pressure signal into an electrical signal. In some embodiments, the pressure sensor 180A may be disposed on the display 190. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 300 determines pressure intensity based on the change in the capacitance. When a touch operation is performed on the display 190, the electronic device 300 detects intensity of the touch operation by using the pressure sensor 180A. The electronic device 300 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on the icon of Messages, an instruction for creating an SMS message is executed.

The acceleration sensor 180E may detect accelerations in various directions (usually on three axes) of the electronic device 300. When the electronic device 300 is still, a magnitude and a direction of gravity may be detected. The acceleration sensor 180E may be further configured to identify a posture of the electronic device, and is used in an application, for example, switching between a landscape mode and a portrait mode or a pedometer.

The optical proximity sensor 180G may include, for example, a light emitting diode (LED) and an optical detector, for example, a photodiode. The light emitting diode may be an infrared light emitting diode. The electronic device 300 emits infrared light by using the light emitting diode. The electronic device 300 detects infrared reflected light from a nearby object by using the photodiode. When sufficient reflected light is detected, the electronic device 300 may determine that there is an object near the electronic device 300. When insufficient reflected light is detected, the electronic device 300 may determine that there is no object near the electronic device 300. The optical proximity sensor 180G may also be used in a smart cover mode or a pocket mode to automatically perform screen unlocking or locking.

The ambient light sensor 180L is configured to sense ambient light brightness. The electronic device 300 may adaptively adjust brightness of the display 190 based on the sensed brightness of the ambient light. The ambient light sensor 180L may also be configured to automatically adjust white balance during photographing. The ambient light sensor 180L may also cooperate with the optical proximity sensor 180G to detect whether the electronic device 300 is in a pocket, to avoid an accidental touch.

The touch sensor 180K is also referred to as a "touch component". The touch sensor 180K may be disposed on the display 190, and the touch sensor 180K and the display 190 constitute a touchscreen, which is also referred to as a "touchscreen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 190. In embodiments of this application, for example, the touchscreen including the touch sensor 180K and the display 190 may detect a slide-up operation of the user. With the slide-up operation of the user, the touchscreen may display a corresponding interface change, for example, display a split-screen hot zone icon in a split-screen hot zone, and display a small-window hot zone icon in a small-window hot zone. For example, the user releases a finger when the slide-up operation of the user arrives at the split-screen hot zone or the small-window hot zone on the display 190. In this case, an object window of the slide-up operation of the user may be displayed on the touchscreen by using a split-screen mode window or a small-window mode window. For details, refer to the following detailed descriptions. Details are not described herein. In some other embodiments, the touch sensor 180K may be alternatively disposed on a surface of the electronic device 300, and is located at a location different from that of the display 190.

Based on the structure of the electronic device 300 shown in FIG. 4, the following describes in detail an implementation process of the window switching solution in embodiments of this application with reference to the accompanying drawings. The following describes, by using Embodiment 1, a specific process in which the electronic device 300 implements the window switching method in embodiments of this application when the split-screen hot zone and the small-window hot zone of the electronic device 300 are disposed on the upper left and the upper right of the screen.

### Embodiment 1

As described above, in some other embodiments, locations of the small-window hot zone and/or the split-screen hot zone that are/is disposed on the screen of the electronic device 300 may alternatively be in any appropriate distribution form. This is not limited herein. For example, on the electronic device 300 provided in embodiments of this application, the split-screen hot zone used for triggering display of a split-screen mode window and the small-window hot zone used for triggering display of a small-window mode window may be separately disposed at the upper left and the upper right of the screen. With reference to a flowchart and schematic diagrams of related interfaces, the following describes in detail the specific process in which the electronic device 300 implements the window switching method in embodiments of this application.

FIG. 5A and FIG. 5B are a schematic flowchart of an implementation of a window switching method according to an embodiment of this application. It may be understood that all steps in a procedure shown in FIG. 5A and FIG. 5B are performed by the electronic device 300, and the execution body is not described repeatedly in the following steps.

As shown in FIG. 5A and FIG. 5B, the procedure includes the following steps.

501: Detect a user operation used to switch a window display mode, and identify an object window of the operation.

For example, the user may perform an operation of sliding up or down, or sliding left or right on the screen of the electronic device 300. When detecting an operation of dragging the object window to a preset small-window hot zone or split-screen hot zone on the screen of the electronic device 300 by the user, the electronic device 300 may consider that the user operation used to switch the window display mode is detected. The electronic device 300 may collect coordinate data of a touch location corresponding to a sliding operation of the user on the screen, object window information corresponding to the touch location, and the like, to determine whether the user drags the object window to the preset hot zone. It may be understood that determining that the user drags the object window to the preset hot zone may include: An entire display region and a border part of the object window are within the preset hot zone, or a size of an overlapping region between a display region of the object window and the preset hot zone is greater than a preset size threshold, or it is detected that a touch location of a drag operation on the object window is within the preset hot zone, or the like. This is not limited herein.

It may be understood that the sliding operation performed by the user on the screen of the electronic device 300 may be, for example, the operation 2 shown in FIG. 3a, namely, an operation of sliding up a currently displayed application window from the bottom of the screen of the electronic device 300. In some other embodiments, the sliding operation performed by the user on the screen of the electronic device 300 may alternatively be an operation of touching and holding and sliding up an application icon on a home screen displayed by the electronic device 300, or an operation of touching and holding and sliding up a video task window or a document on an application interface displayed by the electronic device 300, or the like. This is not limited herein. Interface changes corresponding to the operation of touching and holding and sliding up the application icon on the home screen of the electronic device 300 and the operation of touching and holding and sliding up the video task window or the document on the application interface displayed by the electronic device 300 are described below with reference to schematic diagrams of interfaces. Details are not described herein.

It may be understood that, when detecting the user operation used to switch the window display mode, the electronic device 300 may determine a corresponding operation object, namely, the object window, based on the coordinate data of the touch location that is on the screen of the electronic device 300 and that is touched by the user. For example, the application window 310 on the interfaces shown in FIG. 3a to FIG. 3c is the object window of the slide-up operation performed by the user on the screen of the electronic device 300. It may be understood that, in a process in which the user operates the object window to move upward, a window size of the object window may gradually decrease. For details, refer to the related descriptions in FIG. 3a to FIG. 3c. Details are not described herein again.

In some other embodiments, the electronic device 300 may alternatively detect a sliding path of the sliding operation performed by the user on the screen, that is, detect a movement track of the touch location, and match the sliding path with a preset sliding path used to switch the window display mode, to determine whether the user operation used to switch the window display mode is detected. This is not limited herein. The sliding path of the sliding operation of the user may be a straight line, an arc, a curve, or the like.

502: Determine whether a scale-down proportion of the object window is less than or equal to a preset proportion threshold. If a determining result is yes, that is, when the scale-down proportion of the object window is less than or equal to the preset proportion threshold, step 503 is performed, and a hot zone mask and/or a hot zone icon corresponding to the preset hot zone are/is displayed on the screen. If a determining result is no, that is, when the scale-down proportion of the object window is greater than the preset proportion threshold, a determining process of step 502 continues to be performed.

For example, the scale-down proportion of the object window may be determined by calculating a ratio of a real-time window size of the object window to a size of the object window displayed in full screen. In step 501, after the electronic device 300 identifies that the sliding operation of the user is a slide-up operation and identifies the object window of the sliding operation (namely, the slide-up operation) of the user, the electronic device 300 may calculate the scale-down proportion of the object window based on the real-time window size of the object window, and compare the scale-down proportion with the proportion threshold preset on the electronic device 300. For example, the preset proportion threshold may be set to 70%, 75%, or another appropriate value. This is not limited herein.

In some other embodiments, when performing step 502, the electronic device 300 may alternatively determine, by determining another threshold condition, whether a change corresponding to the object window meets a condition for triggering display of the hot zone mask and/or the hot zone icon corresponding to the preset hot zone, for example, determine, by determining whether a real-time height of the touch location of the user or a real-time height of the object window meets a preset height threshold condition, whether the foregoing condition for triggering display is met. This is not limited herein.

503: Display the hot zone mask and/or the hot zone icon corresponding to the preset hot zone.

For example, in step 502, when the electronic device 300 determines that the scale-down proportion of the object window is less than or equal to the preset proportion threshold, the hot zone mask and/or the hot zone icon corresponding to the preset hot zone may be displayed on the screen of the electronic device 300. The preset hot zone on the screen of the electronic device 300 may be, for example, the split-screen hot zone and/or the small-window hot zone. When the split-screen hot zone is preset on the screen of the electronic device 300, if the determining result of step 502 is yes, the electronic device 300 may display the split-screen hot zone 330 and/or the split-screen hot zone icon 331. If the determining result of step 502 is no, the electronic device 300 may display the small-window hot zone 320 and/or the small-window hot zone icon 321. In some embodiments, both the split-screen hot zone and the small-window hot zone may be set on the screen of the electronic device 300. If the determining result of step 502 is yes, the electronic device 300 may display the interface shown in FIG. 3c. This is not limited herein.

For example, both the split-screen hot zone and the small-window hot zone are set on the screen of the electronic device 300. The proportion threshold preset on the electronic device 300 is, for example, 75%. When the electronic device 300 determines that the scale-down proportion of the object window (namely, the application window 310) reaches 75%, the split-screen hot zone icon 331 and the small-window hot zone icon 321 shown in FIG. 3c are displayed on the screen of the electronic device 300. The split-screen hot zone icon 331 may be displayed in the split-screen hot zone 330 shown in FIG. 3c, and the small-window hot zone icon 321 may be displayed in the small-window hot zone 320 shown in FIG. 3c.

Refer to FIG. 3c. In some embodiments, the split-screen hot zone 330 and/or the split-screen hot zone icon 331 may be displayed on the upper left of the screen of the electronic device 300, and the small-window hot zone 320 and/or the small-window hot zone icon 321 may be displayed on the upper right of the screen of the electronic device 300. In some other embodiments, the small-window hot zone 320 and/or the small-window hot zone icon 321 may alternatively be displayed on the upper left of the screen of the electronic device 300, and the split-screen hot zone 330 and/or the split-screen hot zone icon 331 may be displayed on the upper right of the screen of the electronic device 300. In some other embodiments, the hot zone mask and/or the hot zone icon corresponding to the preset hot zone may alternatively be displayed in another location that is on the screen of the electronic device 300 and that is convenient for the user to operate. This is not limited herein.

In addition, it may be understood that, when the electronic device 300 is in a landscape mode, display locations of the small-window hot zone, the split-screen hot zone, the small-window hot zone icon, and the split-screen hot zone icon may be correspondingly adjusted to be within an upper left region and an upper right region, or other regions that are on the screen in the landscape mode and that are convenient for a user operation. This is not limited herein.

It may be understood that a display size of the hot zone mask and/or a display size of the hot zone icon displayed by the electronic device 300 may be appropriately preset, and a change range of the display size may be preset, so that when the object window approaches a preset hot zone range, a change of the display size of the hot zone mask and/or a change of the display size of the hot zone icon can indicate a change of a proximity distance of the object window. Details are described below, and are not described herein.

504: Determine whether a height of the touch location corresponding to the user operation reaches a first preset height. If the height of the touch location corresponding to the object window of the user operation reaches the first preset height, that is, a determining result is yes, step 505 is performed to further determine that the touch location corresponding to the object window of the user operation is located on the left side of the screen of the electronic device 300 or on the right side of the screen of the electronic device 300. If the height of the touch location corresponding to the object window of the user operation does not reach the first preset height, that is, a determining result is no, step 504 continues to be performed to continue to determine whether the height of the touch location corresponding to the object window of the user operation reaches the first preset height.

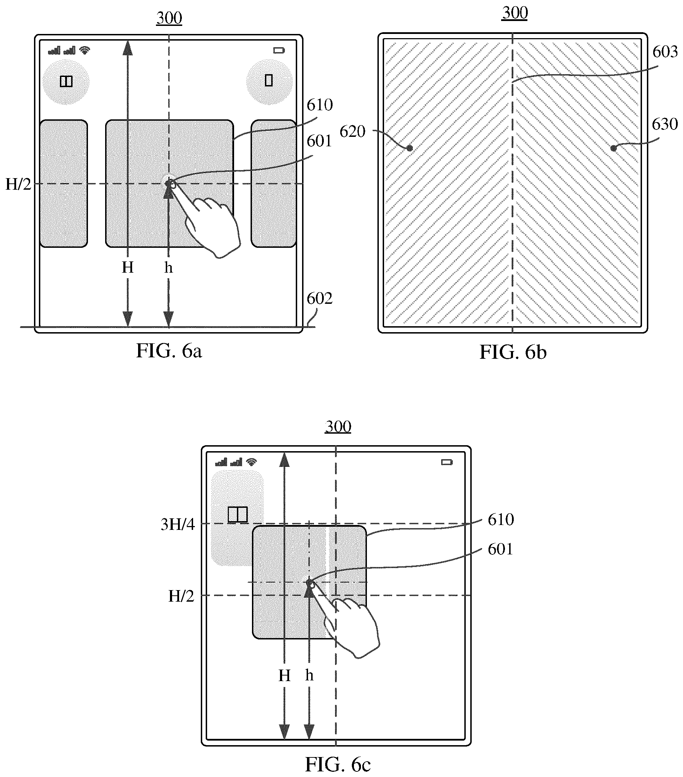

For example, in a process of detecting that the user continues to operate the object window to move upward, the electronic device 300 may obtain the coordinate data of the touch location of the sliding operation of the user in real time, and determine whether the height of the touch location reaches the first preset height. For example, refer to FIG. 6a. For example, 1/2 of a height H of the screen of the electronic device 300 may be set as the first preset height, and the electronic device 300 may obtain coordinate data corresponding to a touch location 601 of an object window 610 of a user operation in real time, to determine a height h of the touch location 601. As shown in FIG. 6a, a reference line of the height h of the touch location 601 and a reference line of the height H of the screen of the electronic device 300 may be both a straight line 602 on which the lower edge of the screen of the electronic device 300 is located. In this way, when determining that the height h of the touch location 601 is greater than or equal to H/2, the electronic device 300 may determine that the height of the touch location corresponding to the object window 610 of the user operation reaches the first preset height, that is, the determining result is yes. When determining that the height h of the touch location 601 is less than H/2, the electronic device 300 may determine that the height of the touch location corresponding to the object window 610 of the user operation does not reach the first preset height, that is, the determining result is no.

In some other embodiments, the electronic device 300 may alternatively determine, by detecting a real-time location of the object window, whether a real-time height of the object window reaches the first preset height. The real-time height of the object window may be, for example, a height of a geometric center point of the object window. The electronic device 300 may determine the location of the object window based on detected coordinate information of the touch location of the slide-up operation of the user, a relative location relationship between the object window and the touch location of the slide-up operation of the user, and the like, to determine the real-time height of the object window. It may be understood that, in some other embodiments, the height of the object window may alternatively be determined with reference to a height of another location point in the object window, for example, a height of a middle point on an upper edge of the object window is used as the height of the object window. In addition, in some other embodiments, the first preset height may alternatively be set to another value, for example, may be set to 2H/3, or set to 30 mm. This is not limited herein.

It may be understood that, both the determining process performed in step 504 and the determining process performed in step 505 are used to determine whether the electronic device 300 needs to switch a currently displayed interface. In some other embodiments, when performing step 504, the electronic device 300 may determine, by determining another threshold condition, whether the currently displayed interface needs to be switched. For example, the electronic device 300 may determine whether a coincidence degree between the display region of the object window and the preset hot zone region on the screen meets a preset coincidence degree threshold. Alternatively, the electronic device 300 may determine, by determining whether the scale-down proportion of the display size of the object window in a slide-up operation process of the user reaches another proportion threshold different from the preset proportion threshold in step 502, whether the currently displayed interface needs to be switched. This is not limited herein.

505: Determine that the touch location corresponding to the user operation is located in a left region of the screen or a right region of the screen, to determine a window display mode correspondingly switched through the user operation. If it is determined that the touch location corresponding to the object window of the user operation is located in the left region of the screen of the electronic device 300, it may be determined that the user operation is an operation of switching a display mode of the object window to a split-screen mode, and the electronic device 300 further performs step 506 to display a guide interface for switching to a split-screen mode window. If it is determined that the touch location corresponding to the object window of the user operation is located in the right region of the screen of the electronic device 300, it may be determined that the user operation is an operation of switching a display mode of the object window to a small-window mode, and step 510 is performed to display a guide interface for switching to a small-window mode window.

For example, the electronic device 300 may determine, based on the coordinate data of the touch location of the object window of the user operation, that the touch location is located in the left region of the screen or the right region of the screen. For division of the left region of the screen and the right region of the screen of the electronic device 300, for example, a screen display region on a left side of a vertical symmetry axis of the screen of the electronic device 300 may be defined as a left region of the screen, and a screen display region on a right side of the vertical symmetry axis of the screen of the electronic device 300 may be defined as a right region of the screen. Refer to FIG. 6b. A screen display region on a left side of a vertical symmetry axis 603 of the screen of the electronic device 300 is a left region 620 of the screen of the electronic device 300, and a screen display region on a right side of the vertical symmetry axis 603 of the screen of the electronic device 300 is a right region 630 of the screen of the electronic device 300. If the electronic device 300 determines that the touch location of the object window of the user operation is located in the left region 620 of the screen shown in FIG. 6b, the electronic device 300 may determine that the user operation is the operation of switching the display mode of the object window to the split-screen mode. If the electronic device 300 determines that the touch location of the object window of the user operation is located in the right region 630 of the screen shown in FIG. 6b, the electronic device 300 may determine that the user operation is the operation of switching the object window to the small-window mode.

It may be understood that, in some other embodiments, alternatively, a case in which the touch location of the object window of the user operation is located in the left region 620 of the screen may be determined as the operation of switching the display mode of the object window to the small-window mode, and a case in which the touch location of the object window of the user operation is located in the right region 630 of the screen may be determined as the operation of switching the display mode of the object window to the split-screen mode. This is not limited herein. That the electronic device 300 determines, as the operation of switching the display mode of the object window to the split-screen mode or the small-window mode, a case in which the touch location is located in the left region of the screen or the right region of the screen should correspond to the hot zone mask and/or the hot zone icon that are/is displayed in step 503 and that correspond/corresponds to the preset hot zone.

In some other embodiments, the electronic device 300 may further determine, based on the coordinate data of the touch location of the object window of the user operation, a relative location relationship between the object window of the user operation and the touch location, and the like, that the object window is located in the left region or the right region of the screen, and then determine whether to continue to perform step 506 or perform step 510. This is not limited herein.

506: Display the guide interface for switching to the split-screen mode window.

For example, in step 505, if the electronic device 300 determines that the touch location corresponding to the object window of the user operation is located in the left region of the screen of the electronic device 300, the electronic device 300 may display the guide interface for switching to the split-screen mode window. Refer to FIG. 3g. When the user operates the object window (namely, the application window 310 shown in FIG. 3g) to move to the left region of the screen of the electronic device 300, and the height h of the user touch location is greater than or equal to 1/2 of the height H of the screen of the electronic device 300, the display size of the split-screen hot zone 330 may be increased to the size shown in FIG. 3g, the display size of the split-screen hot zone icon 331 may also be correspondingly increased to the size shown in FIG. 3g, and the display size of the application window 310 operated by the user may be decreased to the size shown in FIG. 3g. That is, the interface shown in FIG. 3g may be used to guide the user to operate the object window to move to the split-screen hot zone 330. For details, refer to FIG. 3g and the related descriptions. Details are not described herein again.

It may be understood that, in a process in which the user operates the object window to move to the split-screen hot zone 330, the display size of the split-screen hot zone 330 displayed in FIG. 3g may alternatively continue to be increased to the display size of the split-screen hot zone 330 shown in FIG. 3h. When the touch location corresponding to the object window of the user operation is located in the split-screen hot zone 330, the entire display region or a part of the display region of the object window is located in the range of the split-screen hot zone 330. In this case, a display style of the split-screen hot zone icon 331 may be further switched to guide the user to select a display location of the object window in a to-be-displayed split-screen interface. Details are not described herein.

507: Determine whether the height of the touch location corresponding to the user operation reaches a second preset height. If the height of the touch location corresponding to the object window of the user operation reaches the second preset height, that is, a determining result is yes, step 508 is performed to display a simulated split-screen interface corresponding to the split-screen mode. If the height of the touch location corresponding to the object window of the user operation does not reach the second preset height, that is, a determining result is no, step 507 continues to be performed to continue to determine whether the height of the touch location corresponding to the object window of the user operation reaches the second preset height.

For example, in a process in which the user continues to operate the object window to move to the preset hot zone, the electronic device 300 may further determine whether the height of the touch location corresponding to the object window of the user operation reaches the second preset height. The second preset height may be, for example, 3/4 of the height H of the screen of the electronic device 300, and the second preset height is greater than the first preset height. Refer to FIG. 6c. In a process in which the user operates the object window 610 to move upward to the preset hot zone, the height h of the touch location 601 is gradually increased correspondingly. When h≥3H/4, the electronic device 300 may determine that the height of the touch location corresponding to the object window of the user operation reaches the second preset height. If h<3H/4, the electronic device 300 determines that the height of the touch location corresponding to the object window of the user operation does not reach the second preset height.

In some other embodiments, the electronic device 300 may alternatively determine, by detecting a real-time location of the object window, whether the real-time height of the object window reaches the second preset height. The real-time height of the object window may be, for example, the height of the geometric center point of the object window, or may be a height of another location point on the object window. This is not limited herein. In addition, in some other embodiments, the second preset height may be set to another value greater than the first preset height, for example, may be set to 3H/5, or may be set to 60 mm. This is not limited herein.

It may be understood that both the determining process performed in step 507 and the determining process performed in step 511 are used to determine whether the electronic device 300 switches the display mode of the object window to the display mode corresponding to the preset hot zone. In some other embodiments, when performing step 507 or step 511, the electronic device 300 may determine, by determining another threshold condition, whether to switch the display mode of the object window to the display mode corresponding to the preset hot zone, for example, the electronic device 300 may determine, by determining whether a coincidence degree between the display region of the object window and the preset hot zone region on the screen meets another preset coincidence degree threshold, or by determining whether the reduction proportion of the display size of the object window in the process of the slide-up operation of the user reaches another proportion threshold different from the preset proportion threshold in step 502 and step 504, whether to switch the display mode of the object window to the display mode corresponding to the preset hot zone. This is not limited herein.

It may be understood that a region location of the preset hot zone on the screen of the electronic device 300 is usually fixed after being set. Therefore, the height of the preset hot zone, location coordinate information of the preset hot zone on the screen, and the like are all fixed. Therefore, a second height threshold referenced in the determining process in step 507 may be appropriately set, for example, may be set based on the height of the preset hot zone. In the determining process in step 505, a determining condition corresponding to the left side of the screen and the right side of the screen may also be appropriately set based on the location coordinate information of the preset hot zone on the screen. The determining condition corresponding to the left side of the screen and the right side of the screen may be, for example, a preset coordinate data range. This is not limited herein. For example, after the second height threshold and the determining condition corresponding to the left side of the screen and the right side of the screen are appropriately set based on the height and the location coordinate information of the preset hot zone, when it is detected that a height of the touch location of the operation of dragging the object window reaches the second height threshold, and it is determined in step 505 that the touch location is located on the left side of the screen, it may be determined that the object window is dragged to the preset hot zone. For example, the preset hot zone may be the split-screen hot zone. When it is detected that the height of the touch location of the operation of dragging the object window reaches the second height threshold, and it is determined in step 505 that the touch location is located on the right side of the screen, it may be determined that the object window is dragged to the preset hot zone. For example, the preset hot zone may be the small-window hot zone.

In addition, it may be understood that a process of determining, based on a preset height determining condition and that the touch location is located on the left side of the screen or the right side of the screen, whether to drag the object window to the preset hot zone in step 507 does not constitute a specific limitation on "the object window is dragged to the preset hot zone". In some other embodiments, whether the object window is dragged to the preset hot zone may alternatively be determined based on another preset condition.

508: Display the simulated split-screen interface having split-screen mode window effect.

For example, in step 507, when the electronic device 300 determines that the height of the touch location corresponding to the object window of the user operation reaches the second preset height, for example, the height h of the touch location 601 corresponding to the object window of the user operation is greater than or equal to 3H/4, the electronic device 300 may display the simulated split-screen interface. For the simulated split-screen interface, refer to the simulated split-screen interface 350 shown in FIG. 3i. The left window 351 may be displayed and highlighted through an interface in a dark mode, to indicate that the left window 351 is a window that is selected by the user and that is used to display content of the object window (namely, the application window 310 shown in FIG. 3i). In this case, the object window may also be located in a display range of the left window 351. For details, refer to the foregoing FIG. 3i and the related descriptions. Details are not described herein again.

509: Detect an operation of releasing the object window by the user in the split-screen hot zone, and display the split-screen mode window.

For example, on the simulated split-screen interface displayed by the electronic device 300, for example, the simulated split-screen interface 350 shown in FIG. 3i, if the electronic device 300 detects the operation of releasing the object window by the user in the left window 351 of the simulated split-screen interface 350, the electronic device 300 may display the object window by using the split-screen mode window, that is, complete a process of switching the display mode of the object window to the split-screen mode. In some other embodiments, when detecting an operation of sliding the object window upward and releasing a finger by the user in the split-screen hot zone 330 shown in FIG. 3h to release the object window, the electronic device 300 may alternatively display the object window by using the split-screen mode window, that is, complete a process of switching the display mode of the object window to the split-screen mode. This is not limited herein.

In this way, the user completes switching the object window to the split-screen mode window by using one continuous slide-up operation. The user operation is simple and quick.

For example, for an interface style of the split-screen mode window displayed by the electronic device 300, refer to the interface styles shown in FIG. 3j to FIG. 3l and the related descriptions of FIG. 3j to FIG. 3l. Details are not described herein again.

510: Display the guide interface for switching to the small-window mode window.

For example, in step 505, if the electronic device 300 determines that the touch location corresponding to the object window of the user operation of the user is located in the right region of the screen of the electronic device 300, the electronic device 300 may display the guide interface for switching to the small-window mode window. Refer to FIG. 3d. When the user operates the object window (namely, the application window 310 shown in FIG. 3d) to move to the right region of the screen of the electronic device 300, and the height h of the user touch location is greater than or equal to 1/2 of the height H of the screen of the electronic device 300, the display size of the small-window hot zone 320 may be increased to the size shown in FIG. 3d, the display size of the small-window hot zone icon 321 may also be correspondingly increased to the size shown in FIG. 3d, and the display size of the application window 310 operated by the user may be decreased to the size shown in FIG. 3d. That is, the interface shown in FIG. 3d may be used to guide the user to operate the application window 310 to move to the small-window hot zone 320. For details, refer to FIG. 3d and the related descriptions. Details are not described herein again.

It may be understood that, in a process in which the user operates the object window to move to the small-window hot zone 320, the display size of the small-window hot zone 320 displayed in FIG. 3d may alternatively continue to be increased to the display size of the small-window hot zone 320 shown in FIG. 3e. When the touch location corresponding to the object window of the user operation is located in the small-window hot zone 320, the entire display region or a part of the display region of the object window is located in the range of the small-window hot zone 320. In this case, a display style of the small-window hot zone icon 321 may be further switched to prompt the user to release the object window at this location, to switch the display mode of the object window to the small-window mode. For details, refer to FIG. 3h and the related descriptions. Details are not described herein again.

511: Determine whether the height of the touch location corresponding to the user operation reaches the second preset height. If the height of the touch location corresponding to the object window of the user operation reaches the second preset height, that is, a determining result is yes, step 512 is performed to continue to detect a further operation of the user. If the height of the touch location corresponding to the object window of the user operation does not reach the second preset height, that is, a determining result is no, step 511 continues to be performed to continue to determine whether the height of the touch location corresponding to the object window of the user operation reaches the second preset height.

For a specific process in which the electronic device 300 determines whether the height of the touch location corresponding to the object window of the user operation reaches the second preset height, refer to the related descriptions in step 507. Details are not described herein again.

512: Detect an operation of releasing the object window by the user in the small-window hot zone, and display the small-window mode window.

For example, in step 511, when the electronic device 300 determines that the height of the touch location corresponding to the object window of the user operation reaches the second preset height, for example, the height h of the touch location corresponding to the object window of the user operation is greater than or equal to 3H/4, the electronic device 300 may display the interface shown in FIG. 3e. If the electronic device 300 detects an operation releasing a finger by the user in the small-window hot zone 320 shown in FIG. 3e to release the object window (namely, the application window 310 shown in FIG. 3e), the electronic device 300 may display the application window 310 by using the small-window mode window, that is, complete a process of switching the object window to the small-window mode window.

In this way, the user completes switching the object window to the small-window mode window by using one continuous slide-up operation. The user operation is simple and quick.

For example, for an interface style of the small-window mode window displayed by the electronic device 300, refer to the interface style shown in FIG. 3f and the related descriptions of FIG. 3f. Details are not described herein again.

In addition, it may be understood that, interface layout effect implemented after object windows displayed on different electronic devices 300 are switched to small-window mode windows or switched to split-screen mode windows may be different, and interface layout effect implemented after application windows of different applications on a same electronic device 300 are switched to small-window mode windows or switched to split-screen mode windows may be different. In an example, the following describes, based on the implementation procedure shown in FIG. 5A and FIG. 5B, several different types of electronic devices 300 with reference to the accompanying drawings, and describes, with reference to application windows of different applications as object windows operated by the user, an example of switching effect implemented by using the window switching solutions in this application.

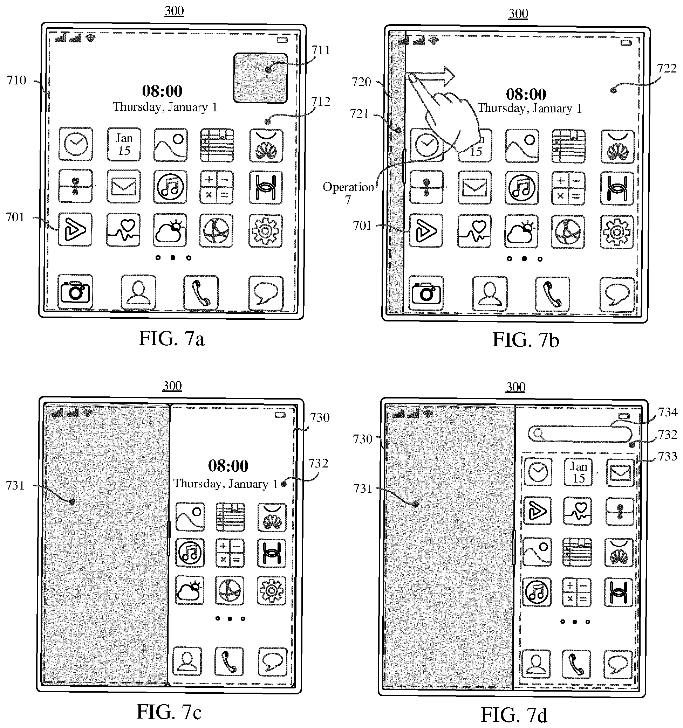

FIG. 7a to FIG. 7f are schematic diagrams of corresponding interfaces displayed when the electronic device 300 switches to the small-window mode window or the split-screen mode window in response to a user operation according to an embodiment of this application.

As shown in FIG. 7a, after the user operates the electronic device 300 to perform interface changes shown in FIG. 3a to FIG. 3e, a small-window mode interface 710 shown in FIG. 7a may be displayed. A small-window mode application window 711 is displayed on the upper right of the small-window mode interface 710, and the small-window mode interface 710 further includes a home screen window 712, that is, a case in which the home screen is displayed in the empty window 340 shown in FIG. 3f. The small-window mode application window 711 may be displayed above the home screen window 712 in a floating manner. It may be understood that, on the small-window mode interface 710 shown in FIG. 7a, the user may separately perform a sliding operation in the small-window mode application window 711 and the home screen window 712, for example, slide leftward and rightward to switch a page. For example, if an interface of a WeChat^{™} application is displayed in the small-window mode application window 711, the user may slide upward and downward in the small-window mode application window 711 to view information, slide leftward and rightward to switch a page in the WeChat^{™} application, and tap a profile picture of a contact to enter a chat interface. In the home screen window 712, the user may slide leftward or rightward to switch a page, and the user may tap an application icon, for example, tap an icon 701 of Huawei^{™} Video, to enable the electronic device 300 to run the video application. In this way, an interface displayed in the home screen window 712 is switched to an interface of Huawei^{™} Video.

It may be understood that, on the small-window mode interface 710 shown in FIG. 7a, the user may further drag the small-window mode application window 711 to any location in the home screen window 712, or may adjust a size of the small-window mode application window 711, or tap a full-screen button in the small-window mode application window 711, to enable the electronic device 300 to display content in the small-window mode application window 711 in full screen. In some other embodiments, the user may alternatively adjust a display location, a display size, and the like of the small-window mode application window 711 in another appropriate operation manner. This is not limited herein.

As shown in FIG. 7b, for example, the electronic device 300 is an electronic device. After the user operates the electronic device 300 to perform interface changes shown in FIG. 3a to FIG. 3c and FIG. 3g to FIG. 3i, a split-screen preparation interface 720 shown in FIG. 7b may be displayed. A split-screen mode application window 721 is displayed on the left edge of the split-screen preparation interface 720, and the split-screen preparation interface 720 further includes a home screen window 722, that is, a case in which the home screen is displayed in the to-be-determined window 362 shown in FIG. 3j. The split-screen mode application window 721 may be displayed above the home screen window 722 in the floating manner. In some other embodiments, a location of the split-screen mode application window 721 relative to the home screen window 722 may alternatively be in another form. This is not limited herein.

As shown in FIG. 7b, a display size of the split-screen mode application window 721 on the left edge of the split-screen preparation interface 720 is small, so that the split-screen mode application window 721 slightly interferes with display of the home screen window 722. If the user wants to operate content displayed in the split-screen mode application window 721, for example, the interface of the WeChat^{™} application, the user may drag the right edge of the split-screen mode application window 721 to slide rightward (referring to an operation 7 shown in FIG. 7b or referring to the operation of dragging the control bar 363 to slide rightward shown in FIG. 3j), to increase the display size of the split-screen mode application window 721. In this case, the electronic device 300 may display a split-screen preparation interface 730 shown in FIG. 7c. In some embodiments, the user may alternatively drag the right edge of the split-screen mode application window 721 to the right edge of the split-screen preparation interface 720 or the right edge of the home screen window 722, to enable the electronic device 300 to display the interface of the WeChat^{™} application in full screen. This is not limited herein.

As shown in FIG. 7c, the content in the split-screen mode application window 721 may be displayed in a left window 731 of the split-screen preparation interface 730 displayed by the electronic device 300, and the home screen may be displayed in a right window 732 of the split-screen preparation interface 730.

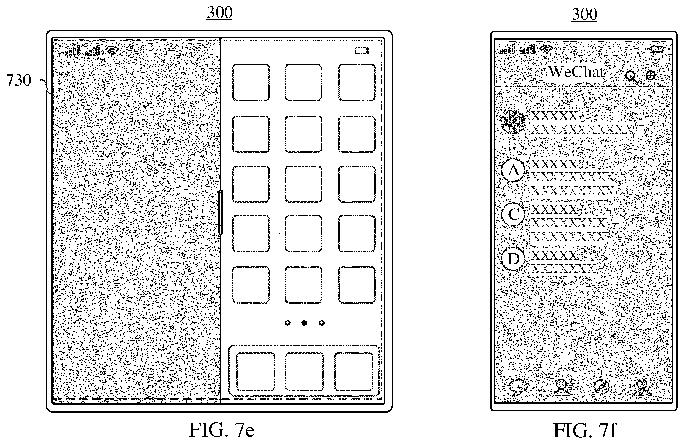

In some other embodiments, the split-screen preparation interface 730 displayed by the electronic device 300 may alternatively be of an interface style shown in FIG. 7d. This is not limited herein. Different from FIG. 7c, on the home screen displayed in the right window 732 in the split-screen preparation interface 730 shown in FIG. 7d, locations of application icons may be automatically arranged from top to bottom based on initial letters of names of installed applications. A search box 734 may be further displayed on the upper side of a region 733 that is in the right window 732 and in which the application icons are displayed. If a large quantity of applications are installed on the electronic device 300, the user may enter a name or a keyword of a to-be-opened application in the search box 734 to quickly search for an application icon, and tap the application icon to run the application. Details are not described herein. In some other embodiments, in the window that is on the split-screen preparation interface displayed by the electronic device 300 and in which the home screen is displayed, a displayed home screen layout style or the like may alternatively be another style, for example, a home screen layout style displayed in the right window 732 shown in FIG. 7e. This is not limited herein.

It may be understood that, on the split-screen preparation interface 720 shown in FIG. 7b, the user may separately perform a sliding operation on the split-screen mode application window 721 and the home screen window 722, or on the split-screen preparation interface 730 shown in FIG. 7c, the user may separately perform a sliding operation on the left window 731 and the right window 732, for example, slide leftward and rightward to switch a page.

For example, in the home screen window 722 shown in FIG. 7b, the user may slide leftward or rightward to switch a page, or tap an application icon, for example, the icon 701 of Huawei^{™} Video, to enable the electronic device 300 to run the video application. In this way, the electronic device 300 may display a final split-screen interface. For example, refer to the split-screen interface 390 shown in FIG. 3m. This is not limited herein.

In addition, on the split-screen preparation interface 720 shown in FIG. 7b, the user may alternatively drag the right edge of the split-screen mode application window 721 to slide leftward, to enable the electronic device 300 to display the home screen in full screen. In addition, when the electronic device 300 displays the split-screen preparation interface 720 shown in FIG. 7b, if the user folds the screen of the electronic device 300, the electronic device 300 may exit the split-screen preparation interface 720, and display the content in the split-screen mode application window 721 in full screen. Refer to an interface of the WeChat^{™} application displayed in full screen shown in FIG. 7f.

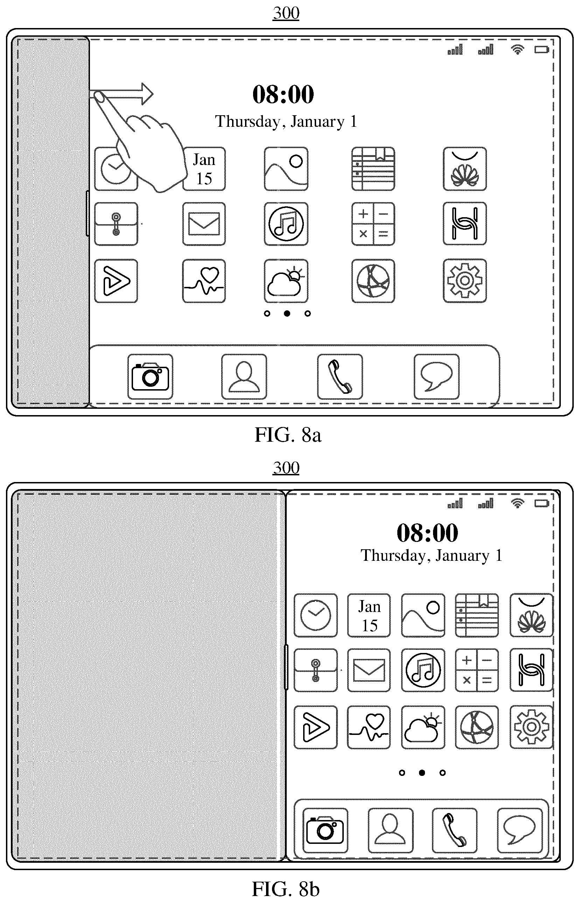

FIG. 8a to FIG. 8d are schematic diagrams of other corresponding interfaces displayed when the electronic device 300 switches to the split-screen mode window in response to a user operation according to an embodiment of this application.

A difference between an interface shown in FIG. 8a and the interface shown in FIG. 7b lies only in that landscape-to-vertical ratios of the screen of the electronic device 300 that displays the split-screen preparation interface are different. Details are not described herein again.

A difference between an interface shown in FIG. 8b and the interface shown in FIG. 7c lies only in that landscape-to-vertical ratios of the screen of the electronic device 300 that displays the split-screen preparation interface are different. Details are not described herein again.

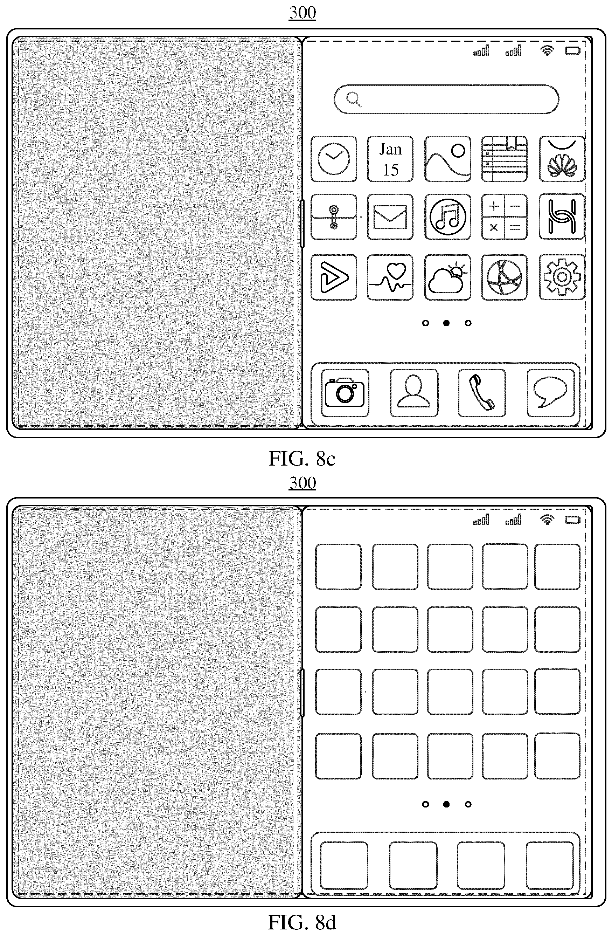

A difference between an interface shown in FIG. 8c and the interface shown in FIG. 7d lies only in that landscape-to-vertical ratios of the screen of the electronic device 300 that displays the split-screen preparation interface are different. Details are not described herein again.

A difference between an interface shown in FIG. 8d and the interface shown in FIG. 7e lies only in that landscape-to-vertical ratios of the screen of the electronic device 300 that displays the split-screen preparation interface are different. Details are not described herein again.

FIG. 9a and FIG. 9b are schematic diagrams of other corresponding interfaces displayed when the electronic device 300 switches to the split-screen mode window in response to a user operation according to an embodiment of this application.

A difference between an interface shown in FIG. 9a and the interface shown in FIG. 7b lies only in that landscape-to-vertical ratios of the screen of the electronic device 300 that displays the split-screen preparation interface are different, and therefore, display locations of split-screen mode application windows are different. Details are not described herein again.

A difference between an interface shown in FIG. 9b and the interface shown in FIG. 7e lies only in that landscape-to-vertical ratios of the screen of the electronic device 300 that displays the split-screen preparation interface are different, and therefore, display locations of split-screen mode application windows are different. Details are not described herein again.

With reference to the accompanying drawings, the following describes an example of a process described in step 501 in which the user touches and holds an application icon on the home screen of the electronic device 300, or touches and holds content such as a document, a video, a task widget, a link, or an attachment in an interface displayed by the electronic device 300, or perform a sliding operation or the like, to quickly switch to the split-screen mode window or the small-window mode window to display corresponding content.

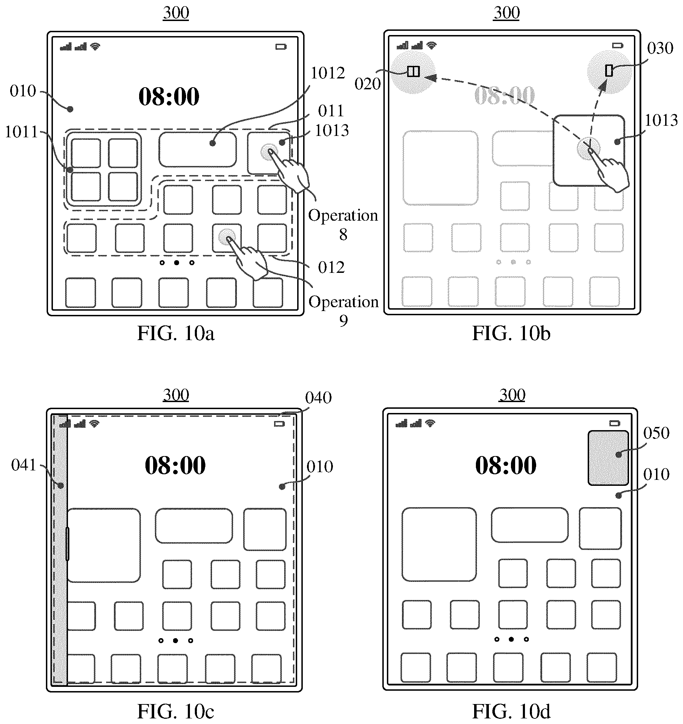

FIG. 10a to FIG. 10d are schematic diagrams of interfaces corresponding to a process in which the user touches and holds an application icon on the home screen of the electronic device 300 and performs a slide-up operation, to quickly switch to a split-screen mode window or a small-window mode window to display a corresponding application interface according to an embodiment of this application.

As shown in FIG. 10a, the home screen 010 of the electronic device 300 may include an application picture. Optionally, the home screen 010 may further include a folder and/or feature capability (Feature Ability, FA) widget 011, and the like. A folder 1011 may provide some functions that help the user manage an application or run an application. For example, the electronic device 300 may receive and display, by using the folder 1011, a plurality of application icons 012 recently used by the user, so that the user quickly taps to run a corresponding application. The electronic device 300 may alternatively display real-time detection data in an application by using an FA widget 1012, for example, display step quantity data in Huawei^{™} Health by using the FA widget 1012. This is not limited herein.

On the home screen 010 shown in FIG. 10a, the user may touch and hold an FA widget 1013 (referring to an operation 8 shown in FIG. 10a) or touch and hold the application icon 012 (referring to an operation 9 shown in FIG. 10a), so that the FA widget 1013 or the application icon 012 is changed into an FA widget or an application icon that can move with a hand. Refer to the FA widget 1013 shown in FIG. 10b. In this case, the FA widget 1013 may be scaled up for display.

As shown in FIG. 10b, in a process in which the user touches and holds the FA widget 1013 and slides upward (namely, a slide-up operation), when the electronic device 300 detects that the finger of the user slides to a range of a split-screen hot zone or a small-window hot zone, the electronic device 300 may display a split-screen hot zone icon 020 on the upper left of the screen, and may display a small-window hot zone icon 030 on the upper right of the screen. When the user drags the FA widget 1013 to a split-screen hot zone below the split-screen hot zone icon 020 and releases the finger, the electronic device 300 may run an application corresponding to the FA widget 1013, and display the application in a window (for example, a left window of the split-screen mode window shown in FIG. 10c) selected by the user in the split-screen mode window. It may be understood that, that the user drags the FA widget 1013 to a split-screen hot zone below the split-screen hot zone icon 020 and releases the finger may include: releasing the finger when an entire coverage region (which may include a border of the widget) of the FA widget 1013 is located in the split-screen hot zone below the split-screen hot zone icon 020, or releasing the finger when 75% of a coverage region of the FA widget 1013 is located in the split-screen hot zone below the split-screen hot zone icon 020, that is, when a size of an overlapping region between the coverage region of the FA widget 1013 and the split-screen hot zone reaches a preset size threshold, or releasing the finger when it is detected that a touch location at which the FA widget 1013 is dragged by the user is located in the split-screen hot zone below the split-screen hot zone icon 020. This is not limited herein.

As shown in FIG. 10c, the electronic device 300 may display a split-screen preparation interface 040 in response to a sliding operation performed by the user on the FA widget 1013 to switch to the split-screen mode window. A split-screen mode window 041, namely, a window selected by the user to display content corresponding to the FA widget 1013, is displayed on the left side of the split-screen preparation interface 040. The home screen 010 may further continue to be displayed in the split-screen preparation interface 040. In this case, the split-screen mode window 041 may be overlaid and displayed above the home screen 010. When the user touches and holds another widget in the FA widget 011, or the user touches and holds an application icon in the application icons 012, repeats a slide-up operation, drags the selected widget or application icon to the split-screen hot zone below the split-screen hot zone icon, and releases the finger, the electronic device 300 displays a two-split screen mode window formed between an application window corresponding to the FA widget 1013 and an application window corresponding to the another widget or application icon selected by the user. For a display style of the two-split screen window, refer to FIG. 3i and the related descriptions. Details are not described herein again.

Further, as shown in FIG. 10b, when the user drags the FA widget 1013 to a small-window hot zone below the small-window hot zone icon 030, the electronic device 300 may run the application corresponding to the FA widget 1013, and display the application in the small-window mode window. Refer to FIG. 10d. The electronic device 300 displays, by using a small-window mode window 050, an application window corresponding to the FA widget 1013. In this case, the home screen 010 may further continue to be displayed on the screen of the electronic device 300. The small-window mode window 050 may be displayed above the home screen 010 in a floating manner.

It may be understood that, in some other embodiments, when detecting an operation of touching and holding the application icon 012 by the user, the electronic device 300 may first convert the application icon operated by the user into an FA widget that can move with the hand, and then continue to respond to a slide-up operation of the user to display a display interface change process shown in FIG. 10b to FIG. 10d. This is not limited herein.

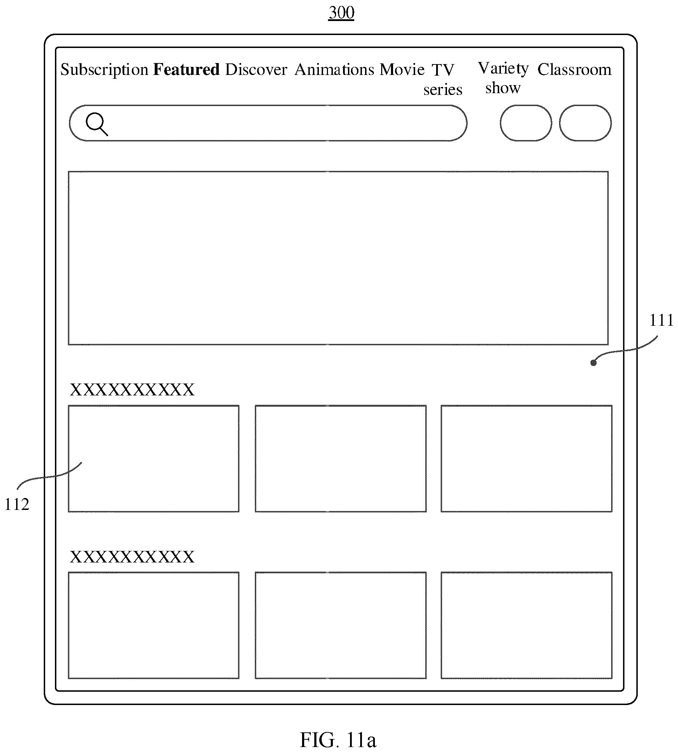

FIG. 11a to FIG. 11d are schematic diagrams of interfaces corresponding to a process in which the user touches and holds a video task window on an interface displayed by the electronic device 300 and performs a slide-up operation, to quickly switch to a split-screen mode window or a small-window mode window to display corresponding video content according to an embodiment of this application.

As shown in FIG. 11a, the electronic device 300 displays a video application interface 111. A recommended video task window 112 may be displayed on the video application interface 111, an image of a corresponding video may be displayed on the video task widget 112, and an introduction to the corresponding video may also be displayed below the video task window 112. This is not limited herein.

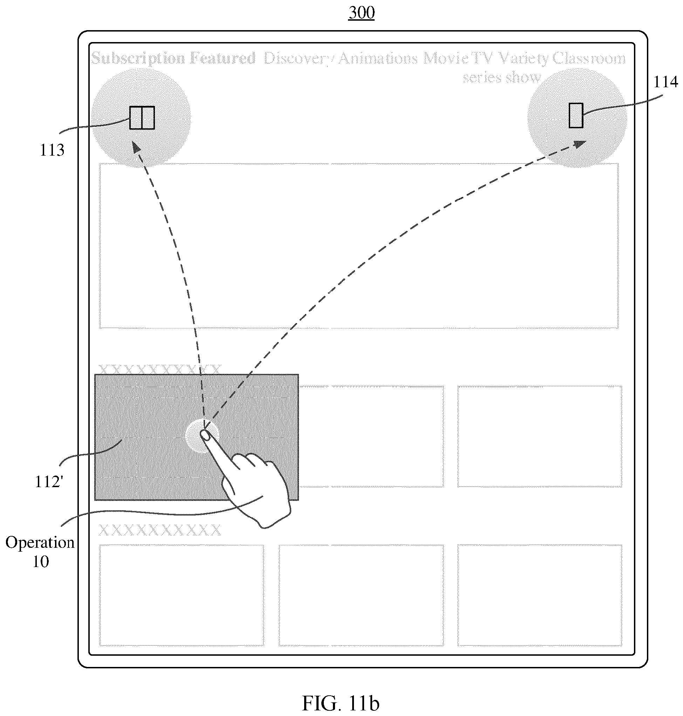

As shown in FIG. 11b, when the user touches and holds the video task window 112 (referring to an operation 10 shown in FIG. 11b), the video task window 112 may be converted into a floating window 112' that moves with a hand, and is displayed above the video application interface 111 in a floating manner, and the image that is of the video task window 112 and that is displayed by using the floating window 112' may also be correspondingly scaled up and displayed. In this case, a split-screen hot zone icon 113 and a small-window hot zone icon 114 may be displayed on the upper side of the screen of the electronic device 300. For example, the split-screen hot zone icon 113 may be displayed on the upper left of the screen of the electronic device 300, and the small-window hot zone icon 114 may be displayed on the upper right of the screen of the electronic device 300. This is not limited herein.

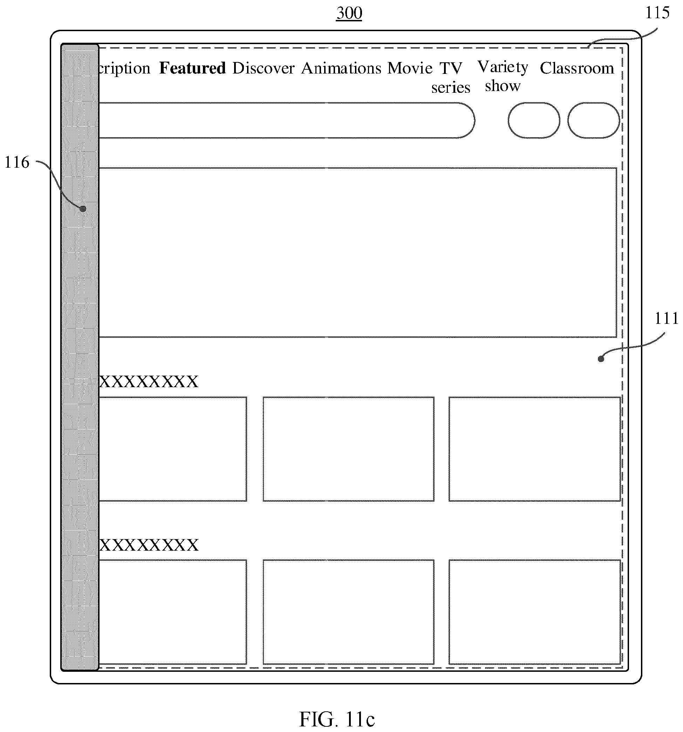

Still refer to FIG. 11b. When the user performs a slide-up operation to move the floating window 112' to a split-screen hot zone below the split-screen hot zone icon 113, and releases a finger, the electronic device 300 may display a split-screen preparation interface 115 shown in FIG. 11c.

As shown in FIG. 11c, a split-screen mode window 116 is displayed on the left side of the split-screen preparation interface 115 displayed by the electronic device 300. A video playing interface corresponding to the video task window 112 is displayed in the split-screen mode window 116. The video application interface 111 may further continue to be displayed on the split-screen preparation interface 115. In this case, the split-screen mode window 116 may be displayed above the video application interface 111 in a floating manner. When the user touches and holds another video task window on the video application interface 111, and repeats an operation of sliding to the split-screen hot zone below the split-screen hot zone icon 113 and releasing the finger to release the video task window, the electronic device 300 may display a two-split screen window, and separately play videos corresponding to the two selected video task windows. For a display style of the two-split screen window, refer to FIG. 3i and the related descriptions. Details are not described herein again.

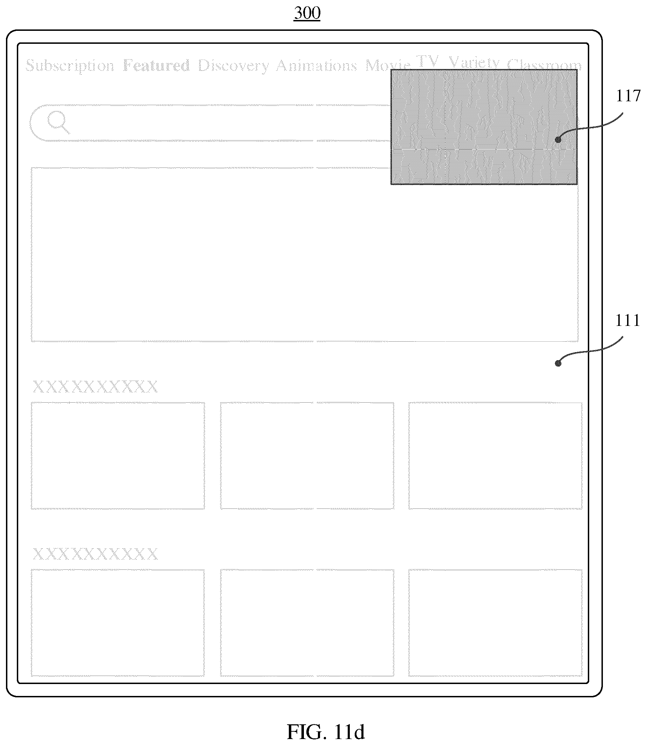

Further, as shown in FIG. 11b, when the user performs a slide-up operation to move the floating window 112' to a small-window hot zone below the small-window hot zone icon 114, and releases the finger, the electronic device 300 may display, by using the small-window mode window, the video playing interface corresponding to the video task window 112. Refer to FIG. 11d. In this case, the electronic device 300 may display, by using a small-window mode window 117, the video playing interface corresponding to the video task window 112. In this case, the video application interface 111 may further continue to be displayed on the screen of the electronic device 300. The small-window mode window 117 may be displayed above the video application interface 111 in the floating manner.

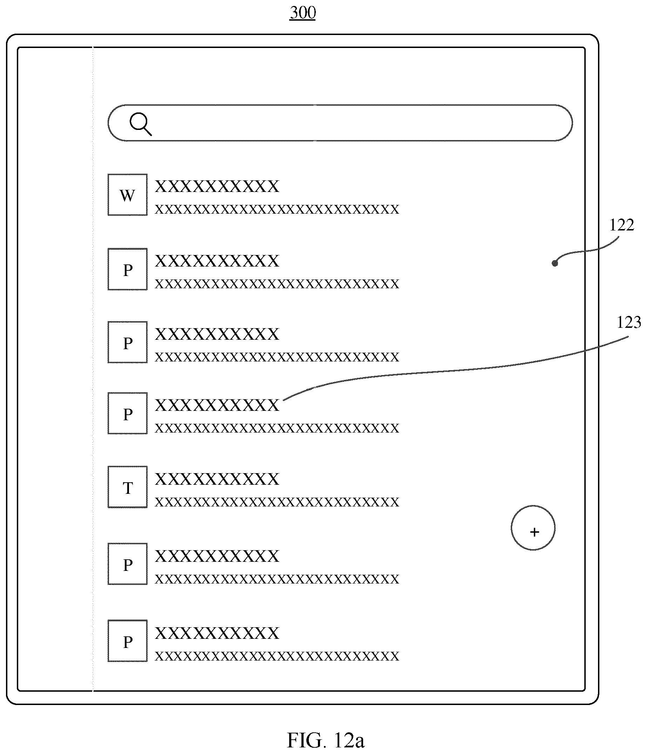

FIG. 12a to FIG. 12d are schematic diagrams of interfaces corresponding to a process in which the user touches and holds a document on an interface displayed by the electronic device 300 and performs a slide-up operation, to quickly switch to a split-screen mode window or a small-window mode window to display content of the document according to an embodiment of this application.

As shown in FIG. 12a, the electronic device 300 displays a document application interface 122. A plurality of documents 123 are displayed on the document application interface 122. A type of the document 123 may be a presentation document format (Power Point, PPT), a document (Document, DOC) format, a portable document format (Portable Document Format, PDF), or the like. This is not limited herein.

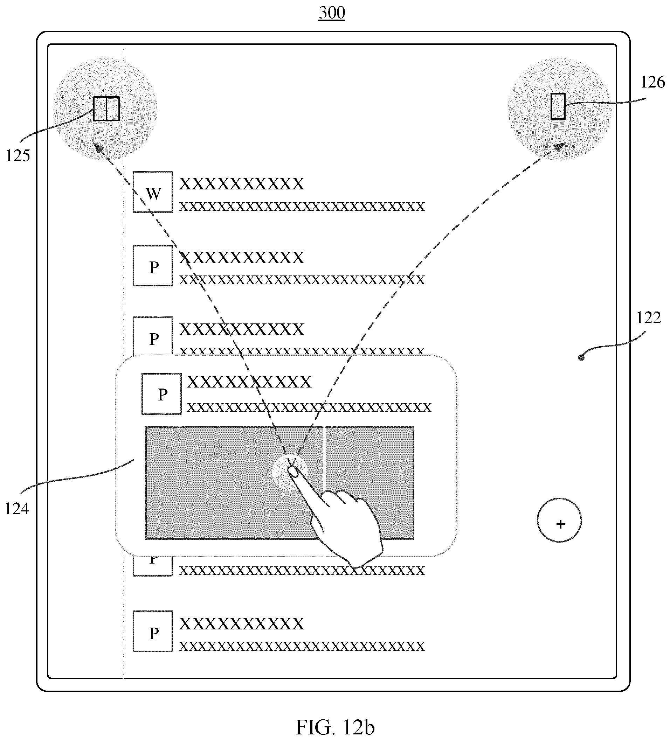

As shown in FIG. 12b, when the user touches and holds the document 123, the electronic device 300 may display a floating window 124 corresponding to the document 123. The floating window 124 can move with a hand. A name, a part of document content, and the like of the document 123 may be displayed in the floating window 124. This is not limited herein. In this case, a split-screen hot zone icon 125 and a small-window hot zone icon 126 may be displayed on the upper side of the screen of the electronic device 300. For example, the split-screen hot zone icon 125 may be displayed on the upper left of the screen of the electronic device 300, and the small-window hot zone icon 126 may be displayed on the upper right of the screen of the electronic device 300. This is not limited herein.

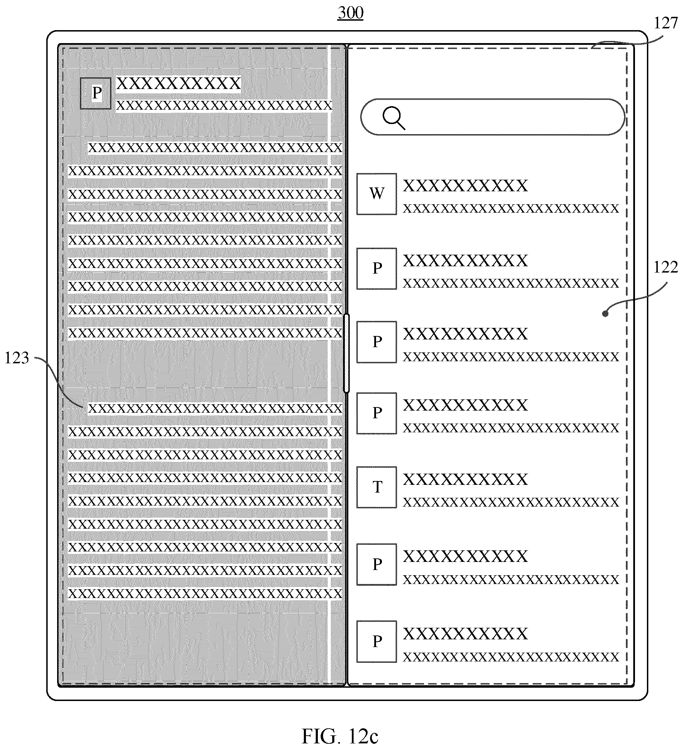

Further, as shown in FIG. 12b, when the user performs a slide-up operation to move the floating window 124 to a split-screen hot zone below the split-screen hot zone icon 125, and releases a finger, the electronic device 300 may display a split-screen interface 127 shown in FIG. 12c.

As shown in FIG. 12c, the content of the document 123 is displayed in a left window of the split-screen interface 127 displayed by the electronic device 300, and the document application interface 122 is displayed in a right window of the split-screen interface 127. In this case, if the user taps another document in the right window of the split-screen interface 127 shown in FIG. 12c, content of the another document may be displayed in the right window of the split-screen interface 127. This is not limited herein.

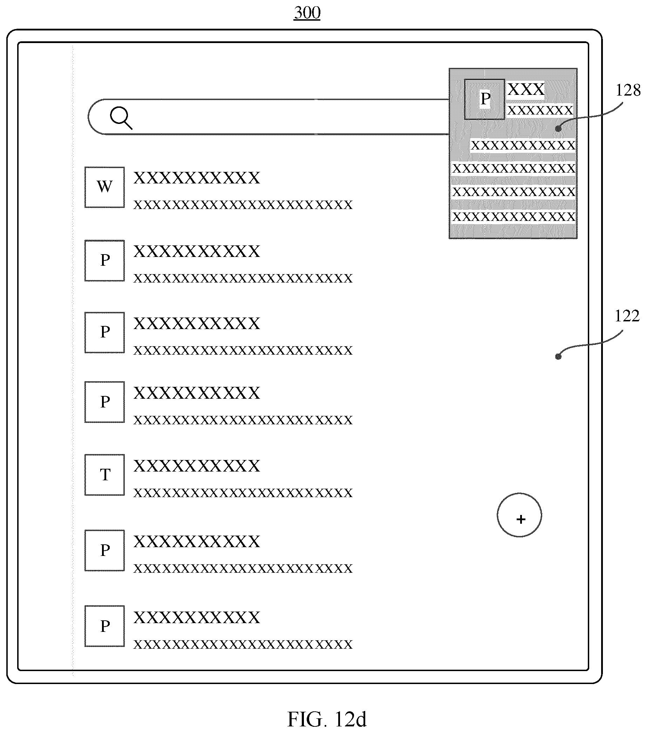

Further, as shown in FIG. 12b, when the user performs a slide-up operation to move the floating window 124 to a small-window hot zone below the small-window hot zone icon 126, and releases the finger, the electronic device 300 may display the content of the document 123 by using the small-window mode window. Refer to FIG. 12d. In this case, the electronic device 300 displays the content of the document 123 by using a small-window mode window 128. In this case, the document application interface 122 may further continue to be displayed on the screen of the electronic device 300. The small-window mode window 128 may be displayed above the document application interface 122 in the floating manner.

Refer to an interface change process shown in FIG. 11a to FIG. 11d or FIG. 12a to FIG. 12d. It may be understood that, in some other embodiments, the user may further touch and hold an access link, or touch and hold an attachment, or the like on an interface displayed by the electronic device 300, to trigger the electronic device 300 to display a split-screen hot zone icon and a small-window hot zone icon. Further, based on guidance of an icon displayed on the electronic device 300, the user completes a process of switching, by using one slide-up operation, the access link or the attachment to a split-screen mode window or a small-window mode window for display. Details are not described herein.

It may be understood that, when the electronic device 300 displays a multi-task interface, the user may alternatively touch and hold a task widget on the multi-task interface, and perform a slide-up operation to move the task widget to a split-screen hot zone or a small-window hot zone, to complete a process of switching corresponding content in the task widget to a split-screen mode window or a small-window mode window for display. The task widget displayed on the multi-task interface by the electronic device 300 may be a single-screen task widget for displaying one window, or may be a split-screen task widget for displaying two or more windows. This is not limited herein.

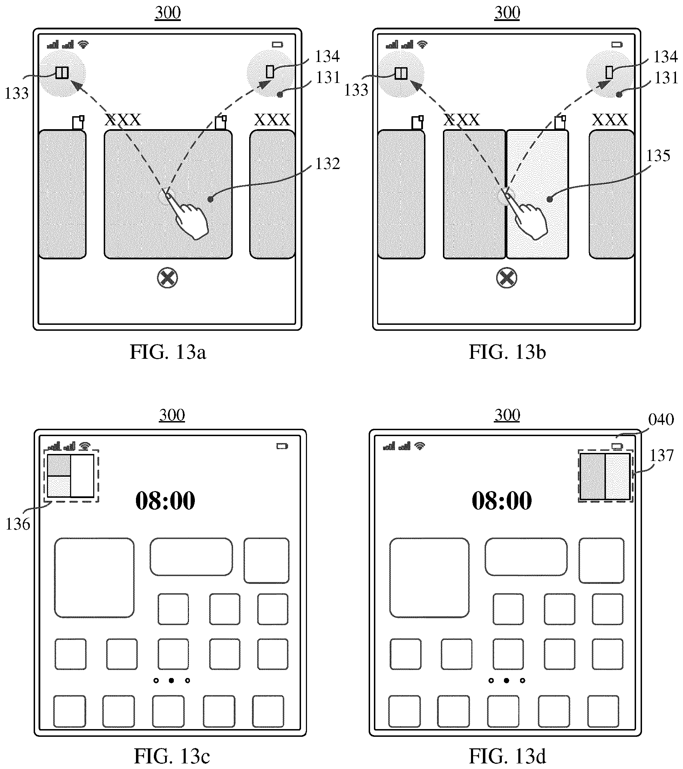

FIG. 13a to FIG. 13d are schematic diagrams of interfaces corresponding to a process in which the user performs a slide-up operation on the task widget on the multi-task interface displayed by the electronic device 300 to quickly switch to the split-screen mode window or the small-window mode window to display content corresponding to the task widget according to an embodiment of this application.

As shown in FIG. 13a, when the user touches and holds a single-screen task widget 132 on a multi-task interface 131 displayed by the electronic device 300, and performs a slide-up operation, a split-screen hot zone icon 133 may be displayed on the upper left of the screen of the electronic device 300, and a small-window hot zone icon 134 may be displayed on the upper right of the screen of the electronic device 300. After the user drags the single-screen task widget 132 to slide to a split-screen hot zone indicated by the split-screen hot zone icon 133, and releases a finger, the electronic device 300 may display the split-screen preparation interface 040 shown in FIG. 10c. For details, refer to FIG. 10c and the related descriptions. Details are not described herein again.

Further, as shown in FIG. 13a, after the user drags the single-screen task widget 132 to slide to a corresponding small-window hot zone below the small-window hot zone icon 134, and releases the finger, the electronic device 300 may display the small-window mode window 050 shown in FIG. 10d. The small-window mode window 050 may be displayed in a floating manner above the home screen 010. For details, refer to FIG. 10d and the related descriptions. Details are not described herein again.

As shown in FIG. 13b, when the user touches and holds a split-screen task widget 135 on the multi-task interface 131 displayed by the electronic device 300, and performs a slide-up operation, the split-screen hot zone icon 133 may still be displayed on the upper left of the screen of the electronic device 300, and the small-window hot zone icon 134 may be displayed on the upper right of the screen of the electronic device 300. After the user drags the single-screen task widget 135 to slide to the split-screen hot zone corresponding to a location of the split-screen hot zone icon 133, and releases the finger, the electronic device 300 may display an interface shown in FIG. 13c.

As shown in FIG. 13c, a three-split screen effect window 136 may be displayed on the upper left of the screen of the electronic device 300, and two split-screen windows in the split-screen task widget 135 may be displayed on the left side of the three-split screen effect window 136. In this case, the two split-screen windows in the split-screen task widget 135 may be distributed up and down, and the right side of the three-split screen effect window 136 is used to display another application window to be selected by the user. It may be understood that, in some other embodiments, the three-split screen effect window 136 may alternatively be displayed in another form. This is not limited herein.

As shown in FIG. 13b, after the user drags the single-screen task widget 135 to slide to the corresponding small-window hot zone below the small-window hot zone icon 134, and releases the finger, the electronic device 300 may display a small-window mode split-screen window 137 shown in FIG. 13d.

As shown in FIG. 13d, in the small-window mode split-screen window 137 displayed on the upper right of the screen of the electronic device 300, window distribution of the two split-screen windows in the split-screen task widget 135 may remain unchanged, and the two split-screen windows in the split-screen task widget 135 are proportionally scaled down to the small-window mode split-screen window 137 for display. Refer to FIG. 13d. In addition, it may be understood that, the small-window mode split-screen window 137 may be, for example, displayed above the home screen of the electronic device 300 or an interface of another application in the floating manner.

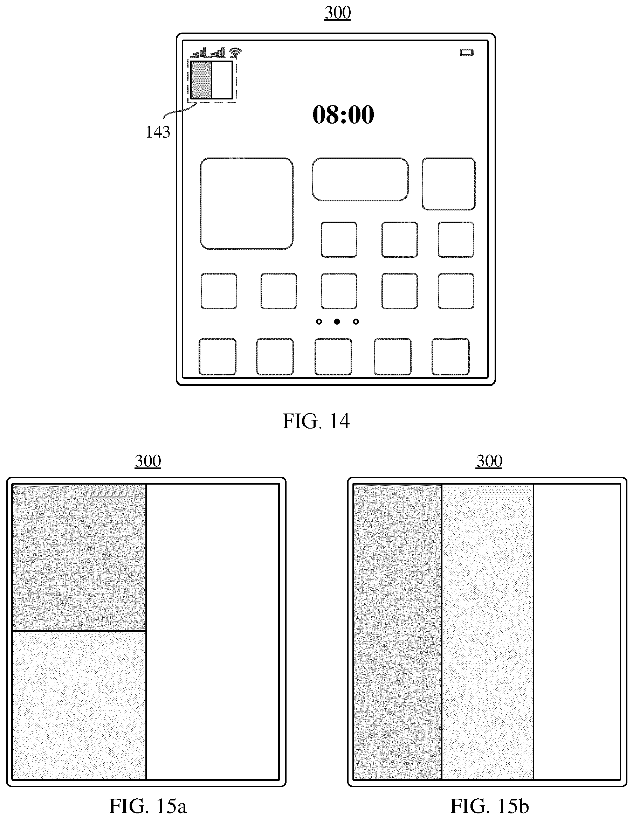

It may be understood that, in some other embodiments, if the user touches and holds a split-screen window in the split-screen task widget 135 on the multi-task interface 131 shown in FIG. 13b, and performs a slide-up operation, for example, the user touches and holds a right window in the split-screen task widget 135, performs a slide-up operation to move the right window to the split-screen hot zone indicated by the split-screen hot zone icon 133, and releases the finger, the electronic device 300 may display an interface shown in FIG. 14.

As shown in FIG. 14, a two-split screen effect window 143 is displayed on the upper left of the screen of the electronic device 300. For example, when the user operates the right window in the split-screen task widget 135 to move to the split-screen hot zone indicated by the split-screen hot zone icon 133, the user selects a left split-screen window for display. In this case, content in the right window in the split-screen task widget 135 operated by the user may be correspondingly displayed in the left window of the two-split screen effect window 143 shown in FIG. 14. It may be understood that, in some other embodiments, content in any window in the split-screen task widget 135 operated by the user may alternatively be displayed in the right window of the two-split screen effect window 143 shown in FIG. 14. This is not limited herein.

It may be understood that, in some other embodiments, the user may perform a slide-up operation from the bottom of the electronic device 300 on a split-screen interface displayed by the electronic device 300, so that the electronic device 300 implements the window switching method described in steps 501 to 512, the two-split screen window displayed by the electronic device 300 is switched to the three-split screen window, the three-split screen window is switched to a four-pane window, or the like, or the electronic device 300 displays the two-split screen window or the three-split screen window in a small-window mode. This is not limited herein.

For a window layout style of the three-split screen window displayed by the electronic device 300, refer to FIG. 15a or FIG. 15b. In some other embodiments, the window layout style of the three-split screen window or a window layout style of a multi-split screen window displayed by the electronic device 300 may alternatively be another appropriate layout style. This is not limited herein.

It may be understood that, on the electronic device 300 that implements the window switching method in this embodiment of this application, the user can quickly switch a window display mode by performing one sliding operation, so that a window/interface currently displayed by the electronic device 300 or a window/interface selected by the user is quickly switched to a split-screen mode window or a small-window mode window for display. The operation is simple and convenient, and user experience is good.

The following describes, by using Embodiment 2, a specific process in which the electronic device 300 implements the window switching method in this application when the split-screen hot zone and the small-window hot zone of the electronic device 300 are disposed at the left edge and the right edge of the screen.

### Embodiment 2

For example, on the electronic device 300 in this embodiment of this application, the split-screen hot zone and/or the small-window hot zone may alternatively be disposed at the left edge and/or the right edge of the screen. During an operation, the user needs to drag an object window to the preset split-screen hot zone or small-window hot zone at the left edge or the right edge of the screen of the electronic device 300, to complete a one-step split-screen operation process or a one-step small-window operation process. The dragging an object window to the preset split-screen hot zone or small-window hot zone at the left edge or the right edge of the screen of the electronic device 300 includes: making an entire display region, a border part, and the like of the object window located in the preset split-screen hot zone or small-window hot zone at the left edge or the right edge of the screen of the electronic device 300, or making a size of an overlapping region between a display region of the object window and the preset split-screen hot zone or small-window hot zone at the left edge or the right edge of the screen of the electronic device 300 greater than a preset size threshold, or detecting that a touch location of an operation of dragging the object window is located in the preset split-screen hot zone or small-window hot zone at the left edge or the right edge of the screen of the electronic device 300, or the like. This is not limited herein.

With reference to a flowchart and schematic diagrams of related interfaces, the following describes in detail the specific process in which the electronic device 300 implements the window switching method in this application.

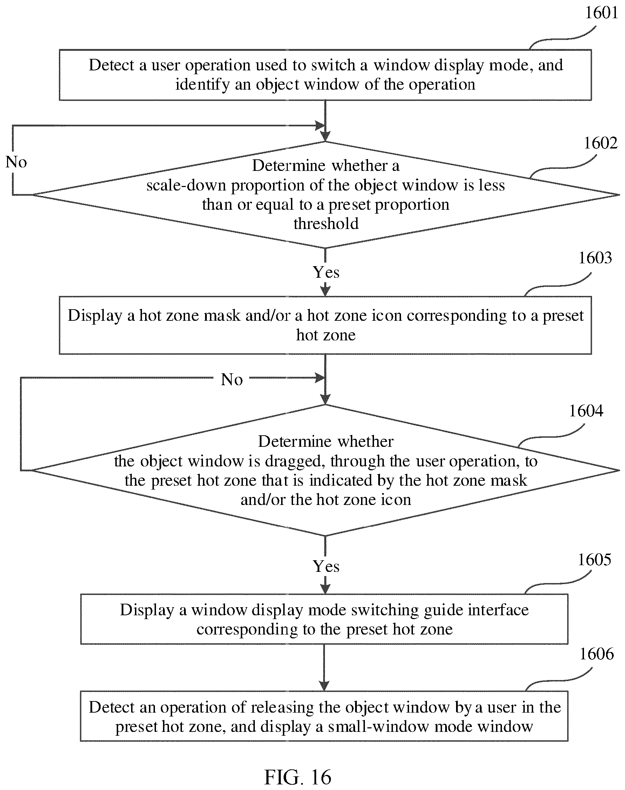

FIG. 16 is another schematic flowchart of implementing, by the electronic device 300, the window switching method according to this application. It may be understood that all steps in a procedure shown in FIG. 16 are performed by the electronic device 300, and the execution body is not described repeatedly in the following steps.

As shown in FIG. 16, the procedure includes the following steps.

1601: Detect a user operation used to switch a window display mode, and identify an object window of the operation. A specific implementation process of step 1601 is the same as that of step 501 in Embodiment 1. Details are not described herein again.

1602: Determine whether a scale-down proportion of the object window is less than or equal to a preset proportion threshold. If a determining result is yes, that is, when the scale-down proportion of the object window is less than or equal to the preset proportion threshold, step 1603 is performed, and a small-window hot zone icon and a split-screen hot zone icon are displayed on the screen. If a determining result is no, that is, when the scale-down proportion of the object window is greater than the preset proportion threshold, a determining process of step 1602 continues to be performed.

A specific implementation process of step 1602 is the same as that of step 502 in Embodiment 1. Details are not described herein again.

1603: Display a hot zone mask and/or a hot zone icon corresponding to a preset hot zone.

A specific implementation process of step 1603 is the same as that of step 503 in Embodiment 1. Details are not described herein again.

For example, in step 1602, if the electronic device 300 determines that the scale-down proportion of the object window is less than or equal to the preset proportion threshold, for example, when the electronic device 300 determines that the scale-down proportion of the object window reaches 75%, the electronic device 300 may display the split-screen hot zone in an eye-catching manner on the left edge of the screen, or display the small-window hot zone in an eye-catching manner on the right edge of the screen, or separately display the split-screen hot zone and the small-window hot zone on the left edge and the right edge of the screen. The eye-catching manner may be, for example, a manner of displaying a location and a size of a hot zone mask on the split-screen hot zone or the small-window hot zone or displaying a corresponding hot zone icon in a color different from a background color of the screen. This is not limited herein.

For example, FIG. 17a to FIG. 17d are schematic diagrams of related interfaces in a window switching process according to an embodiment of this application.

As shown in FIG. 17a, the electronic device 300 displays an application window 1710 in full screen, and the user performs a slide-up operation on the application window 1710 starting from the bottom of the screen of the electronic device 300, so that the application window 1710 is moved upward. In this case, the application window 1710 is an object window of the slide-up operation of the user.

Still refer to FIG. 17b. When the application window 1710 is scaled down to 75% of a size of the application window 1710 shown in FIG. 17a, a small-window hot zone 1720 may be displayed on the right edge of the screen of the electronic device 300. It may be understood that the small-window hot zone 1720 is the hot zone mask corresponding to the preset small-window hot zone on the screen of the electronic device 300. Details are not described herein. As shown in FIG. 17b, in this case, the small-window hot zone 1720 displayed by the electronic device 300 may be, for example, highlighted in a background color different from that of an interface 1730 that is of the electronic device 300 and on which a plurality of application task windows are displayed, to display a location and a size of the small-window hot zone 1720 to the user. In this way, the user continues to operate the application window 1710 to slide to the small-window hot zone 1720, and the electronic device 300 may further display related interfaces shown in FIG. 17c to FIG. 17e, to implement the one-step small-window operation process. The related interfaces shown in FIG. 17c to FIG. 17e are described in the following corresponding steps.

It may be understood that, in some other embodiments, the location of the small-window hot zone 1720 shown in FIG. 17b may alternatively be used to display the split-screen hot zone (namely, the hot zone mask corresponding to the split-screen hot zone preset on the screen), so that the user implements the one-step split-screen operation process on the electronic device 300. This is not limited herein.

1604: Determine whether the object window is dragged, through the user operation, to the preset hot zone that is indicated by the hot zone mask and/or the hot zone icon. If a determining result is yes, it indicates that the user operation is an operation of switching a window display mode. In this case, step 1605 is performed, and a window display mode switching guide interface corresponding to the preset hot zone. If a determining result is no, step 1604 may be repeatedly performed to continue to detect the user operation.

For example, the electronic device 300 continues to detect the user operation. If the user operation is dragging the object window to the displayed hot zone mask and/or the preset hot zone that is indicated by the hot zone icon, the electronic device 300 may determine, based on coordinate information of a detected touch location, a direction of a sliding operation of the user, for example, determine whether the user drags the object window to slide to the hot zone mask displayed on the right edge. In this case, the electronic device 300 may further display the window display mode switching guide interface corresponding to the preset hot zone, that is, step 1605 continues to be performed.

For example, in a process in which the user performs, on an interface shown in FIG. 17b, an operation of dragging the application window 1710 to slide to the location of the small-window hot zone 1720 displayed on the screen of the electronic device 300, the electronic device 300 may further display the window display mode switching guide interface shown in FIG. 17c.

It may be understood that, in some other embodiments, a plurality of hot zones are preset on the screen of the electronic device 300, and the user may operate the object window to move to a location indicated by a hot zone mask or a hot zone icon corresponding to any one of the plurality of preset hot zones, to trigger the electronic device 300 to display a window display mode switching guide interface corresponding to the preset hot zone. Details are not described herein.

1605: Display the window display mode switching guide interface corresponding to the preset hot zone.

For example, if the preset hot zone on the screen of the electronic device 300 is a small-window hot zone, when detecting that the user drags the object window to the small-window hot zone displayed on the screen, the electronic device 300 may display a guide interface for switching to a small-window mode window. For example, on the guide interface displayed on the electronic device 300, another application task window on the left side of the object window is moved leftward out of the screen of the electronic device 300, that is, the electronic device 300 does not display the another application task window on the left side of the object window. In addition, the size of the object window may also be further decreased, for example, decreased to a size within 35% of an initial size.

For example, refer to the guide interface for switching to the small-window mode window shown in FIG. 17c. When the user slides the application window 1710 rightward to the small-window hot zone 1720, for example, the user touch and holds a touch location of the application window 1710 to move to the small-window hot zone 1720, it can be determined that the application window 1710 is moved to the small-window hot zone 1720. In this case, the user releases a finger, and the electronic device 300 may display an interface shown in FIG. 17d, that is, another task window 1740 on the left side of the application window 1710 may be moved leftward and moved out of the screen, and is no longer displayed, and the application window 1710 may be further scaled down, for example, scaled down to 35% of the size of the application window 1710 shown in FIG. 17a. In this process, a display region of the small-window hot zone 1720 may also be further scaled up. On the interface shown in FIG. 17d, if the user further performs an operation to release the application window 1710, the electronic device 300 may continue to perform step 1606, to display the application window 1710 that is switched to the small-window mode window for display. For details, refer to the following corresponding steps and accompanying drawings. Details are not described herein again.

In some other embodiments, the guide interface displayed by the electronic device 300 may alternatively guide, in another interface form, the user to perform a further operation. This is not limited herein.

1606: Detect an operation of releasing the object window by the user in the preset hot zone, and display the small-window mode window.

For example, when detecting the operation of releasing the object window by the user in the preset hot zone, the electronic device 300 may display an interface displayed after the object window is switched to the window display mode corresponding to the preset hot zone, to complete a process of switching the object window to a mode window corresponding to the preset hot zone.

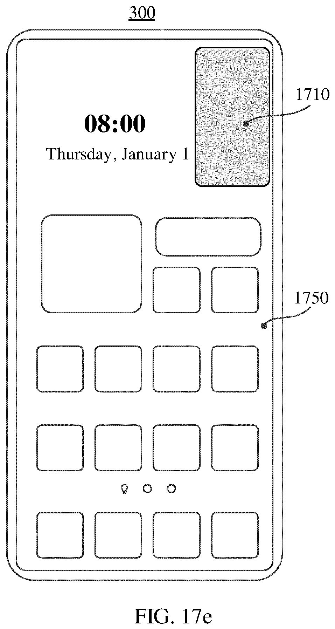

For example, on the guide interface for switching to the small-window mode window shown in FIG. 17d, when detecting an operation of releasing the application window 1710 by the user in the small-window hot zone 1720, the electronic device 300 may display the application window 1710 by using the small-window mode window, namely, a small-window mode interface shown in FIG. 17e.

As shown in FIG. 17e, a home screen 1750 or an interface of another application may be displayed on the screen of the electronic device 300, and the application window 1710 is displayed at the upper right of the home screen 1750 in a floating manner by using the small-window mode window.

It may be understood that, in an interface change process shown in FIG. 17a to FIG. 17d, before the finger leaves the screen (that is, releases a hand), the user performs reverse operations to enable the electronic device to display the interfaces shown in FIG. 17d→FIG. 17c→FIG. 17b→FIG. 17a. That is, if a direction of a sliding operation of the user is opposite to a direction of the operation corresponding to FIG. 17a to FIG. 17d, the operation of switching the window display mode may be canceled, that is, the interface change process shown in FIG. 17a to FIG. 17d is reversible.

It may be understood that, on the electronic device 300 that implements the window switching method in this embodiment of this application, the user can quickly switch the window display mode by performing one sliding operation, so that a window/interface currently displayed by the electronic device 300 or a window/interface selected by the user is quickly switched to a split-screen mode window or the small-window mode window for display. In addition, a location of the small-window hot zone or the small-window hot zone in this embodiment of this application may be convenient for the user to operate the electronic device with one hand. That is, the user may operate the electronic device 300 shown in FIG. 17a to FIG. 17e with one hand to complete a process of switching the window display mode by using one sliding operation. The operation is simple and convenient, and user experience is good.

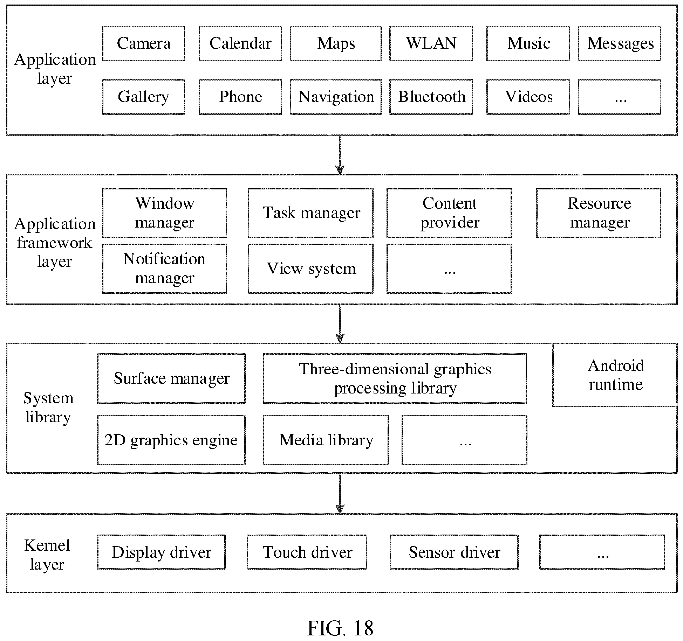

FIG. 18 is a block diagram of a software structure of the electronic device 300 according to an embodiment of this application.

A software system of the electronic device 300 may use a layered architecture, an event-driven architecture, a micro kernel architecture, a micro service architecture, or a cloud architecture. In an embodiment of this application, an Android system with a layered architecture is used as an example to describe a software structure of the electronic device 300.

FIG. 18 is a block diagram of the software structure of the electronic device 300 according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 18, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 18, the application framework layer may include a window manager, a task manager, a phone manager, a resource manager, a notification manager, a view system, and the like.

The window manager is configured to manage a window program. The window manager may obtain a size of a display, determine whether there is a status bar, perform screen locking, take a screenshot, and the like. In embodiments of this application, the window manager may obtain a sliding event corresponding to a sliding operation gesture of a user, and a location and a size of a preset split-screen hot zone and/or a small-window hot zone, to match a corresponding display task, and display a corresponding interface, for example, display the small-window hot zone icon and the split-screen task icon described in step 503, or display the guide interface for switching to the split-screen mode window described in step 506. For details, refer to the related descriptions in step 503 or step 506. Details are not described herein again.

The task manager is configured to cooperate with the window manager to invoke task content corresponding to a sliding operation of the user, for example, a display task that needs to be controlled and executed by the window manager. The task manager invokes content of the corresponding display task, and then sends the content to the window manager for execution, to implement a process of displaying a corresponding interface by the electronic device 300.

The content provider is configured to: store and obtain data, and enable the data to be accessed by an application. The data may include a video, an image, audio, calls that are made and received, a browsing history and bookmarks, an address book, and the like.

The resource manager provides various resources such as a localized character string, an icon, a picture, a layout file, and a video file for an application.

The notification manager enables an application to display notification information in the status bar, and may be configured to convey a notification message. The notification manager may automatically disappear after a short pause without user interaction. For example, the notification manager is configured to provide notifications of download completing, a message prompt, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an announcement is given, the electronic device vibrates, or the indicator light blinks.

The view system includes visual controls such as a control for displaying a text and a control for displaying a picture. The view system may be configured to construct an application. A display interface may include one or more views. For example, a display interface including a notification icon of Messages may include a text display view and an image display view.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules. For example, the functional modules include a surface manager (surface manager), a media library (Media Library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playing and recording of a plurality of common audio and video formats, a static image file, and the like. The media library may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a touch driver, and a sensor driver.

The following describes a working procedure of software and hardware of the electronic device 300 as an example with reference to a scenario in which a slide-up operation is captured to switch to a split-screen mode window.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch and slide-up operation, and an object window corresponding to the slide-up operation is a video application window. A video application invokes an interface of an application framework layer to start the video application, to start the display driver by invoking the kernel layer, and display the video application window in a split-screen mode by using the display 190.

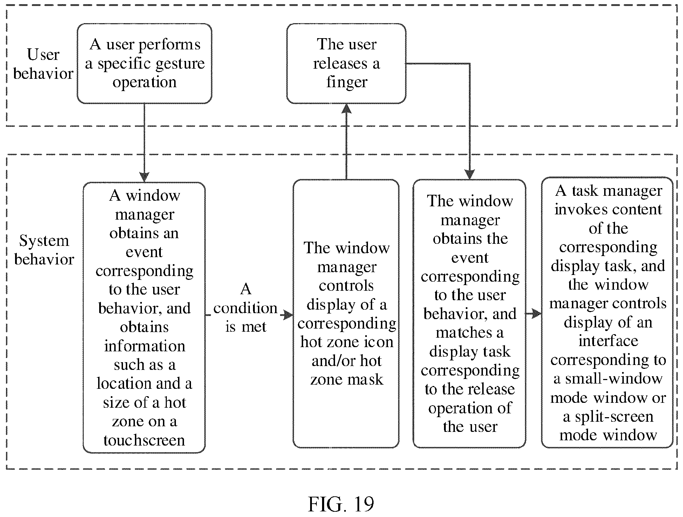

Based on the system structure shown in FIG. 18, FIG. 19 is a schematic diagram of a process of interaction between user behavior and system behavior of the electronic device 300 according to an embodiment of this application.

As shown in FIG. 19, the user behavior includes: The user performs a specific operation gesture on the electronic device 300, for example, a sliding operation (namely, a slide-up operation) from the bottom of the screen of the electronic device 300 described in Embodiment 1, and an operation of dragging an object window by the user and releasing a finger in a split-screen hot zone or a small-window hot zone.

The system behavior of the electronic device 300 is performed in response to the user behavior. As shown in FIG. 19, for example, the touchscreen of the electronic device 300 may detect the feature gesture operation performed by the user, and generate a corresponding touch operation event. The window manager of the electronic device 300 may obtain the event corresponding to the user behavior, obtain information such as a location and a size of the hot zone on the touchscreen, and match a display task corresponding to the slide-up operation of the user. For example, when the window manager determines that the event corresponding to the user behavior meets a condition for triggering display of a hot zone icon and/or a hot zone mask, the hot zone icon, including a split-screen hot zone icon and/or a small-window hot zone icon, may be controlled to be displayed, or the hot zone mask, for example, the small-window hot zone mask highlighted in FIG. 17b, is controlled to be displayed.

Still as shown in FIG. 19, for example, the touchscreen of the electronic device 300 detects an operation of releasing the finger by the user to release the object window in the hot zone, and generates a corresponding touch operation event. The window manager of the electronic device 300 may obtain the event corresponding to the user behavior, obtain information such as a location and a size of the hot zone on the touchscreen, match a display task corresponding to the operation of releasing the finger by the user, and notify the task manager of the matched display task. The task manager invokes corresponding content of the display task, and sends the content to the window manager. The window manager controls to display an interface corresponding to a small-window mode window or a split-screen mode window.

It may be understood that the interaction process between the user behavior and the system behavior of the electronic device 300 shown in FIG. 19 is merely used as an example. In some other embodiments, a process in which the electronic device 300 executes a corresponding task in response to a user operation may be more or less than that shown in FIG. 19, or may be a process different from that shown in FIG. 19. This is not limited herein.

A reference to "an embodiment" or "embodiments" in the specification means that a specific feature, structure, or characteristic described with reference to the embodiment is included in at least one example implementation solution or technology disclosed in this application. The phrase "in an embodiment" appearing in various places in the specification does not necessarily all mean a same embodiment.

This application further relates to an operating apparatus configured to implement processes in the specification. The apparatus may be constructed dedicatedly for required purposes, or may include a general-purpose computer selectively activated or reconfigured by a computer program stored in a computer. Such a computer program may be stored on a computer-readable medium, for example, but not limited to, any type of disk, including a floppy disk, an optical disc, a CD-ROM, a magneto-optical disk, a read only memory (ROM), a random access memory (RAM), an EPROM, an EEPROM, a magnetic or optical card, an application-specific integrated circuit (ASIC), and any type of medium suitable for storing electronic instructions. In addition, each of them may be coupled to a computer system bus. Moreover, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, this application is intended to describe but not to limit the scope of the concepts discussed in the specification.

## Claims

1. A window switching method, applied to an electronic device (300), wherein the method comprises:
detecting a first touch operation (2) of a user, and displaying a first interface, wherein the first interface comprises a first identifier (321), a second identifier (331), and at least one application window (310), the at least one application window comprises a first application window, and an interface of a first application is displayed in the first application window; and
displaying the first application window (310) in a first mode when detecting a first drag operation (3), wherein the first drag operation (3) comprises an operation (4) of dragging the first application window (310) to a first response region (320) corresponding to the first identifier (321), the first response region (320) is located in a display region corresponding to the first interface, the first identifier (321) indicates the first mode corresponding to the first response region (320), and the first touch operation (2) and the first drag operation (3) are one continuous operation; or
displaying the first application window (310) in a second mode when detecting a second drag operation (5), wherein the second drag operation (5) comprises an operation (6) of dragging the first application window (310) to a second response region (330) corresponding to the second identifier (331), the second response region (330) is located in a display region corresponding to the first interface, the second response region (330) does not overlap the first response region (320), the second identifier (331) indicates the second mode corresponding to the second response region (330), and the first touch operation (2) and the second drag operation (5) are one continuous operation;
wherein the first mode is different from the second mode.

2. The method according to claim 1, wherein the method further comprises:
displaying a second interface in response to the first drag operation, wherein the second interface comprises a second window and a third window, and the third window is a window obtained after the first application window is displayed in the first mode, wherein
the third window is displayed above the second window in a floating manner, a height of the third window is equal to a height of the second window, and a width of the third window is less than a width of the second window; or
the third window is displayed above the second window in a floating manner, a width of the third window is equal to a width of the second window, and a height of the third window is less than a height of the second window; or
the third window and the second window are displayed in split screen, and a height of the third window is equal to a height of the second window or a width of the third window is equal to a width of the second window.

3. The method according to claim 1 or 2, wherein
the dragging the first application window to the first response region corresponding to the first identifier comprises:
making an entire display region of the first application window located in the first response region; or
making a size of an overlapping region between a display region of the first application window and the first response region greater than a preset size threshold; or
detecting a touch location of the first drag operation is located in the first response region; and
the dragging the first application window to the second response region corresponding to the second identifier comprises:
making an entire display region of the first application window located in the second response region; or
making a size of an overlapping region between a display region of the first application window and the second response region greater than a preset size threshold; or
detecting a touch location of the second drag operation is located in the second response region.

4. The method according to claim 2, wherein before the displaying a second interface, the method further comprises:
displaying the entire third window on the display of the electronic device; and
automatically moving the third window, to display a part of the third window on the display;
wherein the part of the third window is displayed in the second interface.

5. The method according to any one of claims 2 to 4, wherein a home screen comprising at least one application icon or task widget is displayed in the second window; and after the displaying a second interface, the method further comprises:
in response to an operation on an icon or a task widget of a second application on the home screen, starting the second application, and displaying a second application window, wherein an interface of the second application is displayed in the second application window, wherein
the second application window and the third window are displayed in split screen, and when the third window and the second application window are displayed in split screen, the entire third window is displayed on the display.

6. The method according to claim 1, wherein the method further comprises:
displaying a third interface in response to the second drag operation, wherein the third interface comprises a second window and a fourth window, and the fourth window is a window obtained after the first application window is displayed in the second mode, wherein
the second window is displayed in full screen by the electronic device, the fourth window floats above the second window, both a height and a width of the fourth window are less than a height and a width of the second window, and the entire fourth window is displayed on a display of the electronic device.

7. The method according to any one of claims 1 to 6, wherein
a touch point does not leave a screen of the electronic device in a process of performing the first touch operation and the first drag operation; or
a touch point does not leave the screen of the electronic device in a process of performing the second touch operation and the second drag operation.

8. The method according to any one of claims 1 to 7, wherein after the electronic device displays the first interface, the method further comprises:
in a process of performing the first drag operation, if a distance between a touch location of the first drag operation and a display location of the first identifier gradually decreases, gradually increasing a size of the first identifier; or
in a process of performing the second drag operation, if a distance between a touch location of the second drag operation and a display location of the second identifier gradually decreases, gradually increasing a size of the second identifier.

9. The method according to any one of claims 1 to 8, wherein before detecting the first touch operation of the user, the electronic device displays a fifth window in full screen, wherein the fifth window comprises a target object on which the first touch operation is performed; and
the method comprises:
detecting the first touch operation of the user, and displaying the target object or an interface corresponding to the target object in the first application window on the first interface.

10. The method according to claim 9, wherein the target object comprises any one of an application window, an application icon, a service widget, a task window displayed on an application interface, a link displayed on the application interface, an attachment displayed on the application interface, and a task window on a multi-task interface.

11. The method according to claim 9, wherein the first touch operation is an upward drag operation on the target object; and
when the target object is the fifth window, a start point of the first touch operation is a bottom of a screen of the electronic device.

12. The method according to any one of claims 9 to 11, wherein the detecting a first touch operation of a user, and displaying a first interface comprises:
in a process of dragging the target object to move upward through the first touch operation, displaying, by the electronic device, the first interface when a height of a touch location of the first touch operation reaches a first preset height; or
in a process of dragging the target object to move upward through the first touch operation, displaying, by the electronic device, the first interface when the target object is the fifth window and a scale-down proportion of a display size of the fifth window reaches a first proportion threshold.

13. The method according to any one of claims 1 to 12, wherein
the first identifier is displayed at the upper left of the first interface, and the second identifier is displayed at the upper right of the first interface; or
the first identifier is displayed at the upper right of the first interface, and the second identifier is displayed at the upper left of the first interface.

14. An electronic device, comprising one or more processors and one or more memories, wherein the one or more memories store one or more programs which, when executed by the one or more processors, cause the electronic device to perform the window switching method according to any one of claims 1 to 13.

15. A computer program product, including a computer program which, when executed by a processor, cause the processor to carry out the window switching method according to any one of claims 1 to 13

## Patentansprüche

1. Fensterumschaltverfahren, das auf eine elektronische Vorrichtung (300) angewandt wird, wobei das Verfahren Folgendes umfasst:
Detektieren eines ersten Berührungsvorgangs (2) eines Benutzers und Anzeigen einer ersten Schnittstelle, wobei die erste Schnittstelle eine erste Kennung (321), eine zweite Kennung (331) und mindestens ein Anwendungsfenster (310) umfasst, das mindestens eine Anwendungsfenster ein erstes Anwendungsfenster umfasst und eine Schnittstelle einer ersten Anwendung in dem ersten Anwendungsfenster angezeigt wird; und
Anzeigen des ersten Anwendungsfensters (310) in einem ersten Modus bei Detektieren eines ersten Ziehvorgangs (3),
wobei der erste Ziehvorgang (3) einen Vorgang (4) zum Ziehen des ersten Anwendungsfensters (310) zu einem ersten Reaktionsbereich (320), welcher der ersten Kennung (321) entspricht, umfasst, sich der erste Reaktionsbereich (320) in einem Anzeigebereich, welcher der ersten Schnittstelle entspricht, befindet, die erste Kennung (321) den ersten Modus, welcher dem ersten Reaktionsbereich (320) entspricht, angibt und der erste Berührungsvorgang (2) und der erste Ziehvorgang (3) ein kontinuierlicher Vorgang sind; oder
Anzeigen des ersten Anwendungsfensters (310) in einem zweiten Modus bei Detektieren eines zweiten Ziehvorgangs (5), wobei der zweite Ziehvorgang (5) einen Vorgang (6) zum Ziehen des ersten Anwendungsfensters (310) zu einem zweiten Reaktionsbereich (330), welcher der zweiten Kennung (331) entspricht, umfasst, sich der zweite Reaktionsbereich (330) in einem Anzeigebereich, welcher der ersten Schnittstelle entspricht, befindet, der zweite Reaktionsbereich (330) den ersten Reaktionsbereich (320) nicht überlappt, die zweite Kennung (331) den zweiten Modus, welcher dem zweiten Reaktionsbereich (330) entspricht, angibt und der erste Berührungsvorgang (2) und der zweite Ziehvorgang (5) ein kontinuierlicher Vorgang sind;
wobei sich der erste Modus von dem zweiten Modus unterscheidet.

2. Verfahren nach Anspruch 1, wobei das Verfahren ferner Folgendes umfasst:
Anzeigen einer zweiten Schnittstelle als Reaktion auf den ersten Ziehvorgang, wobei die zweite Schnittstelle ein zweites Fenster und ein drittes Fenster umfasst und das dritte Fenster ein Fenster ist, das erlangt wird, nachdem das erste Anwendungsfenster in dem ersten Modus angezeigt wird, wobei das dritte Fenster in einer schwebenden Weise über dem zweiten Fenster angezeigt wird, eine Höhe des dritten Fensters gleich einer Höhe des zweiten Fensters ist und eine Breite des dritten Fensters kleiner als eine Breite des zweiten Fensters ist; oder das dritte Fenster in einer schwebenden Weise über dem zweiten Fenster angezeigt wird, eine Breite des dritten Fensters gleich einer Breite des zweiten Fensters ist und eine Höhe des dritten Fensters kleiner als eine Höhe des zweiten Fensters ist; oder das dritte Fenster und das zweite Fenster in einem geteilten Bildschirm angezeigt werden und eine Höhe des dritten Fensters gleich einer Höhe des zweiten Fensters ist oder eine Breite des dritten Fensters gleich einer Breite des zweiten Fensters ist.

3. Verfahren nach Anspruch 1 oder 2, wobei
das Ziehen des ersten Anwendungsfensters zu dem ersten Reaktionsbereich, welcher der ersten Kennung entspricht, Folgendes umfasst:
Bewirken, dass sich ein gesamter Anzeigebereich des ersten Anwendungsfensters in dem ersten Reaktionsbereich befindet; oder
Bewirken, dass eine Größe eines überlappenden Bereichs zwischen einem Anzeigebereich des ersten Anwendungsfensters und dem ersten Reaktionsbereich größer als ein voreingestellter Größenschwellenwert ist; oder
Detektieren, dass sich eine Berührungsposition des ersten Ziehvorgangs in dem ersten Reaktionsbereich befindet; und
das Ziehen des ersten Anwendungsfensters zu dem zweiten Reaktionsbereich, welcher der zweiten Kennung entspricht, Folgendes umfasst:
Bewirken, dass sich ein gesamter Anzeigebereich des ersten Anwendungsfensters in dem zweiten Reaktionsbereich befindet; oder
Bewirken, dass eine Größe eines überlappenden Bereichs zwischen einem Anzeigebereich des ersten Anwendungsfensters und dem zweiten Reaktionsbereich größer als ein voreingestellter Größenschwellenwert ist; oder
Detektieren, dass sich eine Berührungsposition des zweiten Ziehvorgangs in dem zweiten Reaktionsbereich befindet.

4. Verfahren nach Anspruch 2, wobei das Verfahren vor dem Anzeigen einer zweiten Schnittstelle ferner Folgendes umfasst:
Anzeigen des gesamten dritten Fensters auf der Anzeige der elektronischen Vorrichtung; und
automatisches Bewegen des dritten Fensters, um einen Teil des dritten Fensters auf der Anzeige anzuzeigen;
wobei der Teil des dritten Fensters in der zweiten Schnittstelle angezeigt wird.

5. Verfahren nach einem der Ansprüche 2 bis 4, wobei ein Startbildschirm, umfassend mindestens ein Anwendungspiktogramm oder ein Aufgaben-Widget, in dem zweiten Fenster angezeigt wird; und das Verfahren nach dem Anzeigen einer zweiten Schnittstelle ferner Folgendes umfasst:
als Reaktion auf einen Vorgang auf einem Piktogramm oder einem Aufgaben-Widget einer zweiten Anwendung auf dem Startbildschirm, Starten der zweiten Anwendung und Anzeigen eines zweiten Anwendungsfensters, wobei eine Schnittstelle der zweiten Anwendung in dem zweiten Anwendungsfenster angezeigt wird, wobei das zweite Anwendungsfenster und das dritte Fenster in dem geteilten Bildschirm angezeigt werden und, wenn das dritte Fenster und das zweite Anwendungsfenster in dem geteilten Bildschirm angezeigt werden, das gesamte dritte Fenster auf der Anzeige angezeigt wird.

6. Verfahren nach Anspruch 1, wobei das Verfahren ferner Folgendes umfasst:
Anzeigen einer dritten Schnittstelle als Reaktion auf den zweiten Ziehvorgang, wobei die dritte Schnittstelle ein zweites Fenster und ein viertes Fenster umfasst und das vierte Fenster ein Fenster ist, das erlangt wird, nachdem das erste Anwendungsfenster in dem zweiten Modus angezeigt wird, wobei
das zweite Fenster durch die elektronische Vorrichtung in einem Vollbildschirm angezeigt wird, das vierte Fenster über dem zweiten Fenster schwebt, sowohl eine Höhe als auch eine Breite des vierten Fensters kleiner als eine Höhe und eine Breite des zweiten Fensters sind und das gesamte vierte Fenster auf einer Anzeige der elektronischen Vorrichtung angezeigt wird.

7. Verfahren nach einem der Ansprüche 1 bis 6, wobei
ein Berührungspunkt in einem Prozess zum Durchführen des ersten Berührungsvorgangs und des ersten Ziehvorgangs einen Bildschirm der elektronischen Vorrichtung nicht verlässt; oder
ein Berührungspunkt in einem Prozess zum Durchführen des zweiten Berührungsvorgangs und des zweiten Ziehvorgangs den Bildschirm der elektronischen Vorrichtung nicht verlässt.

8. Verfahren nach einem der Ansprüche 1 bis 7, wobei das Verfahren, nachdem die elektronische Vorrichtung die erste Schnittstelle anzeigt, ferner Folgendes umfasst:
in einem Prozess zum Durchführen des ersten Ziehvorgangs, falls ein Abstand zwischen einer Berührungsposition des ersten Ziehvorgangs und einer Anzeigeposition der ersten Kennung allmählich abnimmt, allmähliches Vergrößern einer Größe der ersten Kennung; oder
in einem Prozess zum Durchführen des zweiten Ziehvorgangs, falls ein Abstand zwischen einer Berührungsposition des zweiten Ziehvorgangs und einer Anzeigeposition der zweiten Kennung allmählich abnimmt, allmähliches Vergrößern einer Größe der zweiten Kennung.

9. Verfahren nach einem der Ansprüche 1 bis 8, wobei die elektronische Vorrichtung vor dem Detektieren des ersten Berührungsvorgangs des Benutzers ein fünftes Fenster in dem Vollbildschirm anzeigt, wobei das fünfte Fenster ein Zielobjekt, an dem der erste Berührungsvorgang durchgeführt wird, umfasst; und
das Verfahren Folgendes umfasst:
Detektieren des ersten Berührungsvorgangs des Benutzers und Anzeigen des Zielobjekts oder einer Schnittstelle, die dem Zielobjekt entspricht, in dem ersten Anwendungsfenster auf der ersten Schnittstelle.

10. Verfahren nach Anspruch 9, wobei das Zielobjekt ein beliebiges eines Anwendungsfensters, eines Anwendungspiktogramms, eines Dienst-Widgets, eines Aufgabenfensters, das auf einer Anwendungsschnittstelle angezeigt wird, einer Verknüpfung, die auf der Anwendungsschnittstelle angezeigt wird, eines Anhangs, der auf der Anwendungsschnittstelle angezeigt wird, und eines Aufgabenfensters auf einer Mehraufgabenschnittstelle umfasst.

11. Verfahren nach Anspruch 9, wobei der erste Berührungsvorgang ein Aufwärtsziehvorgang auf dem Zielobjekt ist; und
wenn das Zielobjekt das fünfte Fenster ist, ein Startpunkt des ersten Berührungsvorgangs eine untere Seite eines Bildschirms der elektronischen Vorrichtung ist.

12. Verfahren nach einem der Ansprüche 9 bis 11, wobei das Detektieren eines ersten Berührungsvorgangs eines Benutzers und das Anzeigen einer ersten Schnittstelle Folgendes umfasst:
in einem Prozess zum Ziehen des Zielobjekts, um sich über den ersten Berührungsvorgang aufwärts zu bewegen, Anzeigen, durch die elektronische Vorrichtung, der ersten Schnittstelle, wenn eine Höhe einer Berührungsposition des ersten Berührungsvorgangs eine erste voreingestellte Höhe erreicht; oder
in einem Prozess zum Ziehen des Zielobjekts, um sich über den ersten Berührungsvorgang aufwärts zu bewegen, Anzeigen, durch die elektronische Vorrichtung, der ersten Schnittstelle, wenn das Zielobjekt das fünfte Fenster ist und ein Herabskalierungsverhältnis einer Anzeigegröße des fünften Fensters einen ersten Verhältnisschwellenwert erreicht.

13. Verfahren nach einem der Ansprüche 1 bis 12, wobei
die erste Kennung an der oberen linken Seite der ersten Schnittstelle angezeigt wird und die zweite Kennung an der oberen rechten Seite der ersten Schnittstelle angezeigt wird; oder
die erste Kennung an der oberen rechten Seite der ersten Schnittstelle angezeigt wird und die zweite Kennung an der oberen linken Seite der ersten Schnittstelle angezeigt wird.

14. Elektronische Vorrichtung, umfassend einen oder mehrere Prozessoren und einen oder mehrere Speicher, wobei der eine oder die mehreren Speicher ein oder mehrere Programme speichern, die, wenn sie durch den einen oder die mehreren Prozessoren ausgeführt werden, die elektronische Vorrichtung dazu veranlassen, das Fensterumschaltverfahren nach einem der Ansprüche 1 bis 13 durchzuführen.

15. Computerprogrammprodukt, beinhaltend ein Computerprogramm, das, wenn es durch einen Prozessor ausgeführt wird, den Prozessor dazu veranlasst, das Fensterumschaltverfahren nach einem der Ansprüche 1 bis 13 durchzuführen.

## Revendications

1. Procédé de commutation de fenêtre, appliqué à un dispositif électronique (300), dans lequel le procédé comprend :
la détection d'une première opération tactile (2) d'un utilisateur, et l'affichage d'une première interface, dans lequel la première interface comprend un premier identifiant (321), un second identifiant (331), et au moins une fenêtre d'application (310), l'au moins une fenêtre d'application comprend une première fenêtre d'application, et une interface d'une première application est affichée dans la première fenêtre d'application ; et
l'affichage de la première fenêtre d'application (310) dans un premier mode lors de la détection d'une première opération de glissement (3),
dans lequel la première opération de glissement (3) comprend une opération (4) de glissement de la première fenêtre d'application (310) vers une première zone de réponse (320) correspondant au premier identifiant (321), la première zone de réponse (320) est située dans une zone d'affichage correspondant à la première interface, le premier identifiant (321) indique le premier mode correspondant à la première zone de réponse (320), et la première opération tactile (2) et la première opération de glissement (3) sont une opération continue ; ou
l'affichage de la première fenêtre d'application (310) dans un second mode lors de la détection d'une seconde opération de glissement (5), dans lequel la seconde opération de glissement (5) comprend une opération (6) de glissement de la première fenêtre d'application (310) vers une seconde région de réponse (330) correspondant au second identifiant (331), la seconde région de réponse (330) est située dans une région d'affichage correspondant à la première interface, la seconde région de réponse (330) ne chevauche pas la première région de réponse (320), le second identifiant (331) indique le second mode correspondant à la seconde région de réponse (330), et la première opération tactile (2) et la seconde opération de glissement (5) sont une opération continue ;
dans lequel le premier mode est différent du second mode.

2. Procédé selon la revendication 1, dans lequel le procédé comprend également :
l'affichage d'une deuxième interface en réponse à la première opération de glissement, dans lequel la deuxième interface comprend une deuxième fenêtre et une troisième fenêtre, et la troisième fenêtre est une fenêtre obtenue après que la première fenêtre d'application est affichée dans le premier mode, dans lequel
la troisième fenêtre est affichée au-dessus de la deuxième fenêtre de manière flottante, une hauteur de la troisième fenêtre est égale à une hauteur de la deuxième fenêtre, et une largeur de la troisième fenêtre est inférieure à une largeur de la deuxième fenêtre ; ou
la troisième fenêtre est affichée au-dessus de la deuxième fenêtre de manière flottante, une largeur de la troisième fenêtre est égale à une largeur de la deuxième fenêtre, et une hauteur de la troisième fenêtre est inférieure à une hauteur de la deuxième fenêtre ; ou
la troisième fenêtre et la deuxième fenêtre sont affichées en écran divisé, et une hauteur de la troisième fenêtre est égale à une hauteur de la deuxième fenêtre ou une largeur de la troisième fenêtre est égale à une largeur de la deuxième fenêtre.

3. Procédé selon la revendication 1 ou 2, dans lequel
le glissement de la première fenêtre d'application vers la première zone de réponse correspondant au premier identifiant comprend :
la création d'une zone d'affichage complète de la première fenêtre d'application située dans la première zone de réponse ; ou
la création d'une taille d'une zone de chevauchement entre une zone d'affichage de la première fenêtre d'application et la zone de première réponse plus grande qu'un seuil de taille prédéfini ; ou
la détection qu'un emplacement tactile de la première opération de glissement est situé dans la première zone de réponse ; et
le glissement de la première fenêtre d'application vers la seconde zone de réponse correspondant au second identifiant comprend :
la création d'une zone d'affichage complète de la première fenêtre d'application située dans la seconde zone de réponse ; ou
la création d'une taille d'une zone de chevauchement entre une zone d'affichage de la première fenêtre d'application et la seconde zone de réponse plus grande qu'un seuil de taille prédéfini ; ou
la détection qu'un emplacement tactile de la seconde opération de glissement est situé dans la seconde zone de réponse.

4. Procédé selon la revendication 2, dans lequel avant l'affichage d'une deuxième interface, le procédé comprend également :
l'affichage de la totalité de la troisième fenêtre sur l'affichage de l'dispositif électronique ; et
le déplacement automatique de la troisième fenêtre, pour afficher une partie de la troisième fenêtre sur l'écran ;
dans lequel la partie de la troisième fenêtre est affichée dans la deuxième interface.

5. Procédé selon l'une quelconque des revendications 2 à 4, dans lequel un écran d'accueil comprenant au moins une icône d'application ou un widget de tâche est affiché dans la deuxième fenêtre ; et après l'affichage d'une deuxième interface, le procédé comprend également :
en réponse à une opération sur une icône ou un widget de tâche d'une seconde application sur l'écran d'accueil, le démarrage de la seconde application, et l'affichage d'une deuxième fenêtre d'application, dans lequel une interface de la seconde application est affichée dans la deuxième fenêtre d'application, dans lequel
la deuxième fenêtre d'application et la troisième fenêtre sont affichées en écran divisé, et lorsque la troisième fenêtre et la deuxième fenêtre d'application sont affichées en écran divisé, la troisième fenêtre entière est affichée sur l'écran.

6. Procédé selon la revendication 1, dans lequel le procédé comprend également :
l'affichage d'une troisième interface en réponse à la seconde opération de glissement, dans lequel la troisième interface comprend une deuxième fenêtre et une quatrième fenêtre, et la quatrième fenêtre est une fenêtre obtenue après que la première fenêtre d'application est affichée dans le second mode, dans lequel
la deuxième fenêtre est affichée en plein écran par l'dispositif électronique, la quatrième fenêtre flotte au-dessus de la deuxième fenêtre, une hauteur et une largeur de la quatrième fenêtre sont inférieures à une hauteur et à une largeur de la deuxième fenêtre, et la totalité de la quatrième fenêtre est affichée sur l'affichage de l'dispositif électronique.

7. Procédé selon l'une quelconque des revendications 1 à 6, dans lequel
un point de contact ne quitte pas un écran de l'dispositif électronique dans un processus de réalisation de la première opération tactile et de la première opération de glissement; ou
un point de contact ne quitte pas un écran de l'dispositif électronique dans un processus de réalisation de la seconde opération tactile et de la seconde opération de glissement.

8. Procédé selon l'une quelconque des revendications 1 à 7, dans lequel après que le dispositif électronique affiche la première interface, le procédé comprend également :
dans un processus de réalisation de la première opération de glissement, si une distance entre un emplacement de contact de la première opération de glissement et un emplacement d'affichage du premier identifiant diminue progressivement, l'augmentation progressive d'une taille du premier identifiant ; ou
dans un processus de réalisation de la seconde opération de glissement, si une distance entre un emplacement de contact de la seconde opération de glissement et un emplacement d'affichage du second identifiant diminue progressivement, l'augmentation progressive d'une taille du second identifiant.

9. Procédé selon l'une quelconque des revendications 1 à 8, dans lequel avant la détection de la première opération tactile de l'utilisateur, le dispositif électronique affiche une cinquième fenêtre en plein écran, dans lequel la cinquième fenêtre comprend un objet cible sur lequel la première opération tactile est réalisée ; et
le procédé comprend :
la détection de la première opération tactile de l'utilisateur, et l'affichage de l'objet cible ou d'une interface correspondant à l'objet cible dans la première fenêtre d'application sur la première interface.

10. Procédé selon la revendication 9, dans lequel l'objet cible comprend l'un quelconque d'une fenêtre d'application, d'une icône d'application, d'un widget de service, d'une fenêtre de tâche affichée sur une interface d'application, d'un lien affiché sur l'interface d'application, d'une pièce jointe affichée sur l'interface d'application, et d'une fenêtre de tâche sur une interface multitâche.

11. Le procédé selon la revendication 9, dans lequel la première opération tactile est une opération de glissement vers le haut sur l'objet cible ; et
lorsque l'objet cible est la cinquième fenêtre, un point de départ de la première opération tactile est un bas d'un écran de l'dispositif électronique.

12. Procédé selon l'une quelconque des revendications 9 à 11, dans lequel la détection d'une première opération tactile d'un utilisateur, et l'affichage d'une première interface comprend :
dans un processus de glissement de l'objet cible pour se déplacer vers le haut par la première opération tactile, l'affichage, par l'dispositif électronique, de la première interface lorsqu'une hauteur d'un emplacement de contact de la première opération tactile atteint une première hauteur prédéfinie ; ou
dans un processus de glissement de l'objet cible pour se déplacer vers le haut via la première opération tactile, l'affichage, par l'dispositif électronique, de la première interface lorsque l'objet cible est la cinquième fenêtre et qu'une proportion de réduction d'échelle d'une taille d'affichage de la cinquième fenêtre atteint un premier seuil de proportion.

13. Procédé selon l'une quelconque des revendications 1 à 12, dans lequel
le premier identifiant est affiché en haut à gauche de la première interface, et le second identifiant est affiché en haut à droite de la première interface ; ou
le premier identifiant est affiché en haut à droite de la première interface, et le second identifiant est affiché en haut à gauche de la première interface.

14. Dispositif électronique, comprenant un ou plusieurs processeurs et une ou plusieurs mémoires, dans lequel les une ou plusieurs mémoires stockent un ou plusieurs programmes qui, lorsqu'ils sont exécutés par les un ou plusieurs processeurs, amènent le dispositif électronique à réaliser le procédé de commutation de fenêtre selon l'une quelconque des revendications 1 à 13.

15. Produit de programme informatique, comportant un code de programme informatique qui, lorsqu'il est exécuté par un processeur, amène le processeur à mettre en œuvre le procédé de commutation de fenêtre selon l'une quelconque des revendications 1 à 13.
